(19) Europäisches Patentamt / European Patent Office / Office européen des brevets

(11) **EP 2 434 674 B1**

(12) **EUROPÄISCHE PATENTSCHRIFT**

(45) Veröffentlichungstag und Bekanntmachung des Hinweises auf die Patenterteilung:
**30.10.2013  Patentblatt 2013/44**

(51) Int Cl.:
***H04J 3/06*** ^(2006.01)

(21) Anmeldenummer: **10179498.0**

(22) Anmeldetag: **24.09.2010**

(54) **Verfahren zur Zeitsynchronisation in einem Kommunikationsnetz**

Method for synchronising time in a communications network

Procédé de synchronisation temporelle dans un réseau de communication

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**28.03.2012  Patentblatt 2012/13**

(73) Patentinhaber: **Siemens Aktiengesellschaft**
**80333 München (DE)**

(72) Erfinder:
 • **Obradovic, Dragan**
  **85521, Ottobrunn (DE)**
 • **Scheiterer, Ruxandra**
  **82538, Geretsried (DE)**
 • **Wolfrum, Philipp**
  **81539, München (DE)**
 • **Steindl, Günter**
  **92284, Poppenricht (DE)**

(56) Entgegenhaltungen:
 • **CHONGNING NA ET AL: "Optimal estimation and control of clock synchronization following the Precision Time Protocol", CONTROL APPLICATIONS (CCA), 2010 IEEE INTERNATIONAL CONFERENCE ON, IEEE, PISCATAWAY, NJ, USA, 8. September 2010 (2010-09-08), Seiten 1767-1772, XP031781882, ISBN: 978-1-4244-5362-7**

**Beschreibung**

Die Erfindung betrifft ein Verfahren zur Zeitsynchronisation in einem Kommunikationsnetz sowie einen Knoten in einem Kommunikationsnetz und ein entsprechendes Kommunikationsnetz.

In vielen technischen Gebieten werden Kommunikationsnetze dazu verwendet, verteilte Prozesse auf einer Vielzahl von Einheiten automatisch auszuführen. Insbesondere in industriellen Automatisierungsnetzen ist es dabei sehr wichtig, dass die automatischen Prozesse exakt aufeinander abgestimmt sind. Hierzu umfassen die einzelnen Knoten in dem Kommunikationsnetz entsprechende Uhren, welche auf eine Referenzuhr in einem Referenzknoten synchronisiert werden. Der Referenzknoten wird häufig auch als Master-Knoten bezeichnet, wohingegen die anderen Knoten mit den internen Uhren in der Regel Slave-Knoten genannt werden.

Aus dem Stand der Technik bekannte Protokolle zur Synchronisation der Uhren in einem Kommunikationsnetz sind in den industriellen Standards IEEE 1588, IEEE1588v2, IEC 61158 und IEEE 802.1AS spezifiziert. Gemäß diesen Protokollen werden Synchronisationsnachrichten in der Form von Paketen mit Zeitstempeln ausgetauscht. Dabei wird eine Synchronisationsnachricht ausgehend von dem Master-Knoten aufeinander folgend zwischen den Slave-Knoten weitergeleitet. Die von dem Master-Knoten ausgehende Synchronisationsnachricht enthält einen Zeitstempel des ersten Taktzählzustands gemäß der Referenzuhr zum Zeitpunkt des Aussendens der Nachricht. Die Slave-Knoten verarbeiten diese Information und senden erneut Synchronisationsnachrichten aus. Dabei addiert jeder Slave-Knoten die geschätzten Verzögerungen zwischen dem Aussendezeitpunkt der Synchronisationsnachricht im vorhergehenden Knoten und seinem eigenen Aussendezeitpunkt zu dem ersten Taktzählzustand in der empfangenen Synchronisationsnachricht. Der sich hierdurch ergebende Taktzählzustand wird in die auszusendende Synchronisationsnachricht eingefügt. Gegebenenfalls kann ein Slave-Knoten auch den ersten Taktzählzustand aus der vom Master-Knoten ausgesendeten Synchronisationsnachricht in einem ersten Feld speichern und die geschätzten Verzögerungen in einem separaten zweiten Feld aufaddieren. Basierend auf den Informationen in den empfangenen Synchronisationsnachrichten kann jeder Slave-Knoten seine zweiten Taktzählzustände gemäß seiner internen Uhr auf die ersten Taktzählzustände gemäß der Referenzuhr synchronisieren. Der Begriff des Taktzählzustands ist hier und im Folgenden und insbesondere auch in Bezug auf die Erfindung weit zu verstehen. Zum Beispiel kann ein Taktzählzustand auch als eine Zeitangabe (z.B. in Nanosekunden) aufgefasst werden.

Ein Problem bei der oben beschriebenen Synchronisation der Uhren besteht darin, dass aufgrund von Messfehlern bei der Zeitbestimmung, variierenden Frequenzen der einzelnen Uhren, zufälligen Umgebungseffekten und unbekannten Variationen betreffend die Zeitverzögerung zwischen Empfang und Aussenden von Synchronisationsnachrichten die internen Uhren der Slave-Knoten nicht hinreichend genau auf die Referenzuhr des Master-Knotens abgestimmt werden können.

Um die obigen Unsicherheiten bei der Synchronisation der Uhren zu berücksichtigen, ist es aus der Druckschrift [2] sowie einer darauf beruhenden europäischen Patentanmeldung (Referenz [1]) bekannt, basierend auf einem probabilistischen Modell für Zustandsvariablen der Knoten die ersten Taktzählzustände in jedem Slave-Knoten abzuschätzen und mittels der abgeschätzten ersten Taktzählzustände die internen Uhren auf die Referenzuhr zu synchronisieren. Dabei ist der Verlauf der zweiten Taktzählzustände der jeweiligen zweiten Knoten in Abhängigkeit von ersten Taktzählzuständen nicht stetig und beim Empfang von einer neuen Synchronisationsnachricht, welche zur Aktualisierung der Synchronisation führt, können Sprünge auftreten.

In der Druckschrift [3] sowie einer darauf beruhenden deutschen Patentanmeldung (Referenz [4]) wird ein Synchronisationsverfahren beschrieben, bei dem erste Taktzählzustände in einem Slave-Knoten mittels eines Kalman-Filters abgeschätzt werden und aus diesen ersten abgeschätzten Taktzählzuständen mit Hilfe einer Regelung basierend auf einem Linear-Quadratischen Regulator ein geregelter erster Taktzählzustand ermittelt wird, der die synchronisierte Zeit darstellt. In diesem Verfahren wird ein Kompensationsfaktor verwendet, der das aktuelle Taktverhältnis der Referenztaktfrequenz der Referenzuhr des Master-Knotens zur Taktfrequenz der internen Uhr eines Slave-Knotens repräsentiert. Dieser Kompensationsfaktor wird basierend auf einer an sich bekannten Methode abgeschätzt, wobei diese Abschätzung fehlerbehaftet ist, da sie keine Variationen des Taktverhältnisses modelliert.

Aufgabe der Erfindung ist es, in einem Kommunikationsnetz eine über die Zeit gleichmäßige Zeitsynchronisation mit hoher Genauigkeit zu schaffen.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Zeitsynchronisation in einem Kommunikationsnetz mit einer Mehrzahl von Knoten, wobei die Knoten einen ersten Knoten und einen oder mehrere zweite Knoten umfassen. Der erste Knoten generiert dabei erste Taktzählzustände gemäß einer Referenztaktfrequenz, welche auf einer Referenzuhr in diesem Knoten basiert oder welche der erste Knoten von einer Quelle absoluter Zeit, z.B. GPS oder DCF77, empfängt. Der oder die zweiten Knoten generieren jeweils zweite Taktzählzustände gemäß einer internen Taktfrequenz, welche durch eine interne Uhr in dem jeweiligen zweiten Knoten gegeben ist. Die Zeitsynchronisation wird in dem erfindungsgemäßen Verfahren in aufeinander folgenden Synchronisationszyklen durchgeführt, in denen jeweils Synchronisationsnachrichten ausgehend von dem ersten Knoten aufeinander folgend von einem Knoten zu einem weiteren Knoten übertragen werden und eine von einem Knoten ausgesendete Synchronisationsnachricht eine Information enthält, welche zur Zeitsynchronisation im die Synchronisationsnachricht empfangenden Knoten verwendet wird.

In dem erfindungsgemäßen Verfahren erfolgt eine Zeitsynchronisation in einem jeweiligen zweiten Knoten zumindest eines Teils der zweiten Knoten und insbesondere in allen zweiten Knoten basierend auf den nachfolgend erläuterten Schritten i) und ii). In Schritt i) werden ein erster Taktzählzustand und ein Kompensationsfaktor, welcher ein aktuelles Taktverhältnis der Referenztaktfrequenz zur internen Taktfrequenz des jeweiligen zweiten Knotens angibt, für einen in dem jeweiligen zweiten Knoten gemessenen zweiten Taktzählzustand basierend auf einem Schätzverfahren mit Hilfe der Information in einer empfangenen Synchronisationsnachricht abgeschätzt. Anschließend werden aus dem abgeschätzten ersten Taktzählzustand und dem abgeschätzten Kompensationsfaktor mit Hilfe eines Linear-Quadratischen Regulators ein geregelter erster Taktzählzustand und ein geregelter Kompensationsfaktor basierend auf einer Regelstrecke ermittelt, welche als Stellgröße einen Korrekturterm für den geregelten Kompensationsfaktor enthält. Dabei stellt der geregelte erste Taktzählzustand die synchronisierte Zeit dar.

Das erfindungsgemäße Verfahren beruht auf der Erkenntnis, dass die in den Referenzen [3] und [4] beschriebene Ermittlung eines geregelten ersten Taktzählzustands basierend auf einem Schätzverfahren und einer Regelung mit einem Linear-Quadratischen Regulator (englisch: Linear Quadratic Regulator) derart abgewandelt werden kann, dass ein zweidimensionales Modell zur Modellierung der Dynamik des ersten und des jeweiligen zweiten Knotens eingesetzt werden kann. Dieses Modell umfasst als Zustand neben dem ersten Taktzählzustand des ersten Knotens auch den Kompensationsfaktor, der das Taktverhältnis der Referenztaktfrequenz zur internen Taktfrequenz des entsprechenden zweiten Knotens repräsentiert. Auf diese Weise fließt der Kompensationsfaktor als Zustandsgröße im Schätzverfahren sowie bei der Regelung mit dem Linear-Quadratischen Regulator mit ein, so dass dieser Kompensationsfaktor nicht mehr mit einem separaten Schätzverfahren bestimmt werden muss. Wie sich aus der detaillierten Beschreibung ergibt, können mit dem erfindungsgemäßen Verfahren geregelte erste Taktzählzustände in einem zweiten Knoten generiert werden, welche nur einen geringen Fehler gegenüber den tatsächlichen ersten Taktzählzuständen des ersten Knotens aufweisen.

In einer besonders bevorzugten Ausführungsform des erfindungsgemäßen Verfahrens wird der Kompensationsfaktor im Schätzverfahren des Schritts i) derart modelliert, dass eine Variation des Kompensationsfaktors basierend auf einem Zufallsprozess in diesem Faktor enthalten ist, wobei der Zufallsprozess vorzugsweise durch einen Gaußschen Prozess repräsentiert wird.

In einer weiteren bevorzugten Ausführungsform des erfindungsgemäßen Verfahrens wird die Stellgröße nach jedem Empfang einer Synchronisationsnachricht in dem jeweiligen zweiten Knoten aktualisiert und der Regelstrecke zugeführt. Auf diese Weise wird eine kontinuierliche Aktualisierung der Synchronisation sichergestellt. Vorzugsweise wird dabei die Stellgröße über ein sog. ZOH-Glied (ZOH = Zero Order Hold) der Regelstrecke zugeführt, um auf diese Weise die diskreten Aktualisierungen auf eine kontinuierliche Dynamik der Regelstrecke abzubilden.

In einer weiteren bevorzugten Variante des erfindungsgemäßen Verfahrens lautet die Regelstrecke für den Linear-Quadratischen Regulator zum Zeitpunkt des Empfangs einer Synchronisationsnachricht im k-ten Synchronisationszyklus im n-ten zweiten Knoten und unmittelbar vor einer Aktualisierung der Stellgröße wie folgt:

$$\begin{bmatrix} CT_n(k) \\ o_n(k) \end{bmatrix} = \mathbf{A}_n(k-1) \begin{bmatrix} CT_n(k-1) \\ o_n(k-1) \end{bmatrix} + \begin{bmatrix} 0 \\ 1 \end{bmatrix} \cdot u_n^s(k-1)$$

wobei $CT_n(k)$ der geregelte erste Taktzählzustand zum Zeitpunkt des Empfangs der Synchronisationsnachricht im k-ten Synchronisationszyklus ist;

wobei $o_n(k)$ der geregelte Kompensationsfaktor zum Zeitpunkt des Empfangs der Synchronisationsnachricht im k-ten Synchronisationszyklus ist;

wobei $u_n^s(k-1)$ der im (k-1)-ten Synchronisationszyklus verwendete Korrekturterm für den geregelten Kompensationsfaktor ist;

wobei

$$\mathbf{A}_n(k-1) = \begin{bmatrix} 1 & a_n(k-1) \\ 0 & 1 \end{bmatrix};$$

wobei $a_n(k\text{-}1)$ die Zeitdifferenz zwischen zwei aufeinander folgend im jeweiligen zweiten Knoten empfangenen Synchronisationsnachrichten ist, angegeben in zweiten Taktzählzuständen gemäß der internen Taktfrequenz des n-ten zweiten Knotens.

Die Dynamik der Regelstrecke für den Linear-Quadratischen Regulator nach einer Aktualisierung der Stellgröße zum Zeitpunkt des Empfangs der Synchronisationsnachricht im k-ten Synchronisationszyklus in dem n-ten zweiten Knoten bis zur nächsten Aktualisierung der Stellgröße lautet dabei vorzugsweise wie folgt:

$$CT_n(s) = CT_n(k) + o_n(k) \cdot \left( s - s_n^{in}(k) \right)$$

wobei $CT_n(s)$ der geregelte erste Taktzählzustand zum Zeitpunkt eines gemessenen zweiten Taktzählzustands s des jeweiligen zweiten Knotens zwischen den beiden Aktualisierungen ist;

wobei $s_n^{in}(k)$ der gemessene zweite Taktzählzustand des jeweiligen zweiten Knotens zum Zeitpunkt des Empfangs der Synchronisationsnachricht im k-ten Synchronisationszyklus ist.

In einer besonders bevorzugten Ausführungsform werden der erste Taktzählzustand und der Kompensationsfaktor in Schritt i) mit einem Schätzverfahren in der Form eines stochastischen Zustandsschätzers und insbesondere eines Kalman-Filters abgeschätzt. Das Kalman-Filter ist generell aus dem Stand der Technik bekannt und schätzt einen unbekannten Zustand eines Systems basierend auf einem entsprechenden Zustandsraummodell, welches zum einen die Veränderung des zu schätzenden Zustands (sog. Zustandsübergangsmodell) und zum anderen den Zusammenhang zwischen dem Zustand und entsprechenden bekannten Observablen (sog. Beobachtungsmodell) beschreibt. Durch die Kombination von Kalman-Filter und Linear-Quadratischem Regulator wird eine besonders gute Zeitsynchronisation gewährleistet.

In einer besonders bevorzugten Ausführungsform wird der erste Taktzählzustand mit einem Schätzverfahren in der Form eines Kalman-Filters abgeschätzt, das als Zustand den ersten Taktzählzustand und den Kompensationsfaktor zum Empfangszeitpunkt einer Synchronisationsnachricht in dem jeweiligen zweiten Knoten und eine zugehörige stochastische Varianz abschätzt und als eine Observable die Information in der empfangenen Synchronisationsnachricht verwendet. Die Information in einer Synchronisationsnachricht umfasst dabei vorzugsweise einen abgeschätzten ersten Taktzählzustand zum Aussendezeitpunkt der Synchronisationsnachricht in dem jeweiligen zweiten Knoten und eine zugehörige stochastische Varianz. Somit wird im Rahmen einer Synchronisationsnachricht nicht der geregelte erste Taktzählzustand übermittelt, wodurch sichergestellt ist, dass das Verfahren konform zu bereits bekannten Standards zur Zeitsynchronisation ist, insbesondere zu den eingangs erwähnten Standards IEEE 1588, IEEE 1588v2, IEC 61158 und IEEE 802.1AS.

In einer besonders bevorzugten Ausführungsform des erfindungsgemäßen Verfahrens wird folgendes Zustandsraummodell für das Kalman-Filter im n-ten zweiten Knoten für den k-ten Synchronisationszyklus verwendet:

$$\begin{bmatrix} M_n^{in}(k) \\ r_n(k) \end{bmatrix} = \mathbf{A}_n(k-1) \begin{bmatrix} M_n^{in}(k-1) \\ r_n(k-1) \end{bmatrix} + \begin{bmatrix} 0 \\ 1 \end{bmatrix} \cdot \omega_n(k-1)$$

$$\hat{M}_{n-1}^{out}(k) = \begin{bmatrix} 1 & -\hat{d}_n(k) \end{bmatrix} \begin{bmatrix} M_n^{in}(k) \\ r_n(k) \end{bmatrix} + \nu_n(k)$$

wobei $M_n^{in}(k)$ der erste Taktzählzustand zum Empfangszeitpunkt der Synchronisationsnachricht in dem n-ten zweiten Knoten im k-ten Synchronisationszyklus ist;

wobei $r_n(k)$ der Kompensationsfaktor zum Empfangszeitpunkt der Synchronisationsnachricht in dem n-ten zweiten Knoten im k-ten Synchronisationszyklus ist;

wobei $\hat{M}_{n-1}^{out}(k)$ der abgeschätzte erste Taktzählzustand zum Aussendezeitpunkt der Synchronisationsnachricht in dem (n-1)-ten zweiten Knoten oder im ersten Knoten im k-ten Synchronisationszyklus ist;

wobei

$$\mathbf{A}_n(k-1) = \begin{bmatrix} 1 & a_n(k-1) \\ 0 & 1 \end{bmatrix};$$

wobei $a_n(k\text{-}1)$ die Zeitdifferenz zwischen zwei aufeinander folgend im jeweiligen zweiten Knoten empfangenen Synchronisationsnachrichten ist, angegeben in zweiten Taktzählzuständen gemäß der internen Taktfrequenz des n-ten zweiten Knotens;

wobei $d_n(k)$ eine geschätzte Verzögerungszeit zwischen dem Aussendezeitpunkt der vom (n-1)-ten zweiten Knoten ausgesendeten Synchronisationsnachricht und dem Empfangszeitpunkt dieser Synchronisationsnachricht im n-ten zweiten Knoten ist, angegeben in zweiten Taktzählzuständen gemäß der internen Taktfrequenz des n-ten zweiten Knotens;

wobei $v_n(k)$ ein Gaußscher Rauschterm ist, der ein Beobachtungsrauschen repräsentiert;

wobei $\omega_n(k\text{-}1)$ ein Gaußscher Rauschterm ist, der ein Prozessrauschen repräsentiert.

Eine Herleitung des oben beschriebenen Zustandsraummodells findet sich in der detaillierten Beschreibung. Entsprechende Verfahren zum Abschätzen der Verzögerungszeit zwischen Empfang und Aussenden einer Synchronisationsnachricht (auch als Line-Delay bezeichnet) sind dabei hinlänglich aus dem Stand der Technik bekannt. Eine Variante eines solchen Verfahrens ist in den Druckschriften [2] und [3] beschrieben.

In einer weiteren, besonders bevorzugten Ausführungsform des erfindungsgemäßen Verfahrens werden aus dem durch das Kalman-Filter abgeschätzten ersten Taktzählzustand und dem durch das Kalman-Filter abgeschätzten Kompensationsfaktor zum Empfangszeitpunkt einer Synchronisationsnachricht in dem jeweiligen zweiten Knoten und der zugehörigen stochastischen Varianz der abgeschätzte erste Taktzählzustand der nachfolgenden (d.h. weitergeleiteten) Synchronisationsnachricht in dem jeweiligen zweiten Knoten und die zugehörige stochastische Varianz mit Hilfe einer Knoten-Verarbeitungszeit berechnet und in die nachfolgende (d.h. weitergeleitete) Synchronisationsnachricht eingefügt, wobei die Knoten-Verarbeitungszeit eine in dem jeweiligen zweiten Knoten geschätzte Verzögerungszeit zwischen dem Empfang der in dem jeweiligen zweiten Knoten empfangenen Synchronisationsnachricht und dem Aussenden der nachfolgenden Synchronisationsnachricht repräsentiert. Die geschätzte Verzögerungszeit kann ein zweiter Knoten auf einfache Weise über seine lokalen zweiten Taktzählzustände ermitteln.

Die Zeitsynchronisation, welche gemäß dem erfindungsgemäßen Verfahren eingesetzt wird, basiert vorzugsweise auf einem der oben erwähnten Standards IEEE 1588 bzw. IEEE 1588v2 bzw. IEC 61588 bzw. IEEE 802.1AS. In einer weiteren Ausführungsform kommunizieren die Knoten in dem Kommunikationsnetz basierend auf dem bekannten PROFINET-Standard. Ferner wird das erfindungsgemäße Verfahren vorzugsweise in einem Kommunikationsnetz in einer industriellen Automatisierungsanlage eingesetzt.

Die Erfindung betrifft darüber hinaus einen Knoten zur Verwendung als zweiter Knoten in einem Verfahren zur Zeitsynchronisation in einem Kommunikationsnetz, wobei der Knoten zur Durchführung der Zeitsynchronisation gemäß den Schritten i) und ii) des erfindungsgemäßen Verfahrens eingerichtet ist.

Die Erfindung betrifft darüber hinaus ein Kommunikationsnetz mit einer Vielzahl von Knoten, wobei das Kommunikationsnetz einen ersten Knoten und zumindest einen erfindungsgemäßen zweiten Knoten umfasst. Das Kommunikationsnetz ist dabei vorzugsweise zur Ausführung einer oder mehrerer der oben beschriebenen bevorzugten Varianten des erfindungsgemäßen Verfahrens ausgelegt.

Ausführungsbeispiele der Erfindung werden nachfolgend anhand der beigefügten Figuren detailliert beschrieben.

Es zeigen:

Fig. 1 eine schematische Darstellung von mehreren Knoten in einem Kommunikationsnetz, welche Synchronisationsnachrichten gemäß einer Ausführungsform der Er-findung austauschen;

Fig. 2 ein Diagramm, welches die Übertragung von Synchro-nisationsnachrichten gemäß einer Ausführungsform der Erfindung wiedergibt;

Fig. 3 eine schematische Darstellung des Aufbaus eines zweiten Knotens in einem Kommunikationsnetz, wel-cher zur Durchführung einer Variante des erfin-dungsgemäßen Verfahrens eingerichtet ist;

Fig. 4 ein Diagramm, welches Ergebnisse des erfindungsge-mäßen Synchronisationsverfahrens mit einem herkömm-lichen Synchronisationsverfahren vergleicht.

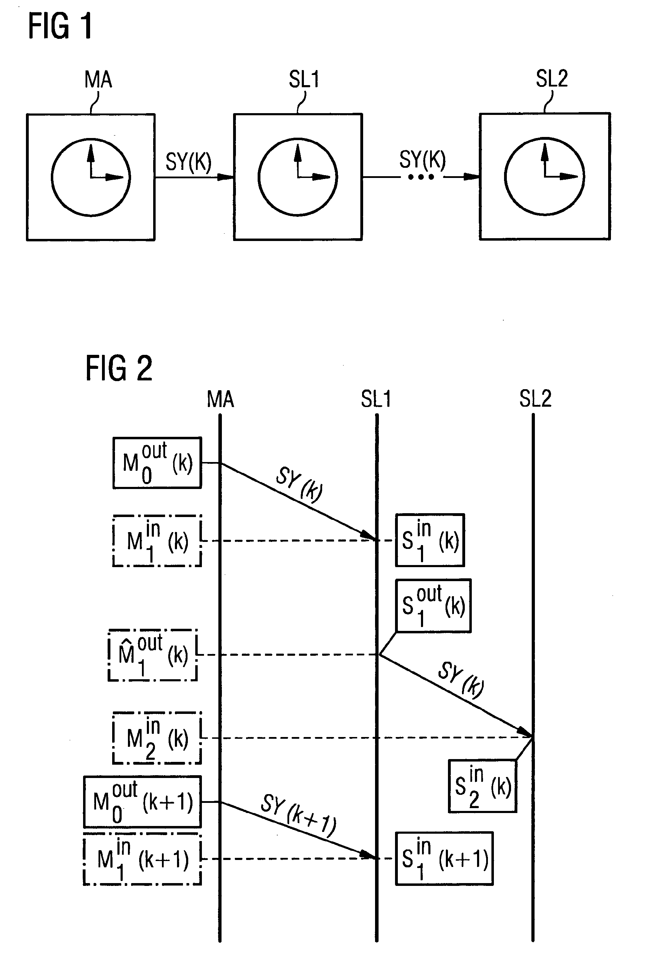

Fig. 1 zeigt eine Kette von Knoten in einem Kommunikationsnetz, in dem eine Ausführungsform des erfindungsgemäßen Verfahrens durchgeführt wird. Das Kommunikationsnetz umfasst einen ersten Knoten in der Form eines sog. Master-Knotens MA sowie mehrere zweite Knoten in der Form sog. Slave-Knoten, wobei in Fig. 1 zwei Slave-Knoten SL1 und SL2 gezeigt sind. Der Master-Knoten MA enthält eine Referenzuhr, welche eine Referenztaktfrequenz generiert. Demgegenüber enthalten die einzelnen Slave-Knoten SL1, SL2 usw. separate interne Uhren, welche entsprechende interne Taktfrequenzen generieren. In dem Kommunikationsnetz gemäß Fig. 1 wird ein geeignetes Zeitsynchronisationsprotokoll, beispielsweise das PTP-Protokoll gemäß dem Standard IEEE 1588 (PTP = Precision Time Protocol), verwendet, um die interne Uhr jedes Slave-Knotens mit der Referenzuhr des Master-Knotens MA zu synchronisieren. Hierzu werden Synchronisationsnachrichten SY(k) von einem Knoten zum nächsten weitergeleitet. Das heißt, eine Synchronisationsnachricht wird von dem Master-Knoten MA zu dem Slave-Knoten SL1 und von dem Slave-Knoten SL1 zu dem Slave-Knoten SL2 usw. geschickt, bis der letzte Slave-Knoten SLN in der Kette der Slave-Knoten erreicht ist.

Die Übertragung von Synchronisationsnachrichten wird in aufeinander folgenden Synchronisationszyklen wiederholt, wobei k die aktuelle Nummer des Synchronisationszyklus bezeichnet. Um eine Synchronisation der Uhren durchzuführen, enthalten die Synchronisationsnachrichten SY(k) jeweils einen Zeitstempel, welcher den Taktzählzustand der Referenzuhr zum Zeitpunkt des Aussendens der Synchronisationsnachricht repräsentiert. Taktzählzustände der Referenzuhr werden im Folgenden auch als erste Taktzählzustände bezeichnet. Die entsprechenden Taktzählzustände basierend auf der internen Uhr der jeweiligen Slave-Knoten werden im Folgenden auch als zweite Taktzählzustände bezeichnet. Beim Weiterleiten einer Synchronisationsnachricht von einem Slave-Knoten zum nächsten wird der erste Taktzählzustand in der Synchronisationsnachricht aktualisiert, indem zu der Zeit der Referenzuhr der zuvor empfangenen Synchronisationsnachricht das geschätzte und auf Master-zeit kompensierte Zeitintervall zwischen dem Aussenden der Synchronisationsnachricht beim vorherigen Knoten bis zum Aussenden derselben im aktuellen Knoten hinzuaddiert wird. Dieses Zeitintervall setzt sich aus dem sog. Line-Delay und Bridge-Delay zusammen. Das Line-Delay ist dabei das Zeitintervall zwischen dem Aussenden der Synchronisationsnachricht im vorhergehenden Knoten und dem Empfang dieser Synchronisationsnachricht im aktuellen Knoten. Das Bridge-Delay ist demgegenüber das Zeitintervall zwischen dem Empfang einer Synchronisationsnachricht im aktuellen Knoten und dem Aussenden derselben an den nächsten Knoten. Line-Delay und Bridge-Delay unterliegen Messfehlern.

In Fig. 2 repräsentieren die drei vertikalen Linien die gemessene Zeit in dem Master-Knoten MA bzw. dem Slave-Knoten SL1 bzw. dem Slave-Knoten SL2. Die Zeitachse gemäß diesen vertikalen Linien erstreckt sich von oben nach unten, d.h. zukünftige Ereignisse werden an weiter unten liegenden Positionen entlang der vertikalen Linien wiedergegeben. Die Referenzuhr des Master-Knotens MA arbeitet mit der Referenztaktfrequenz und die Uhren der Slave-Knoten SL1 und SL2 arbeiten mit entsprechenden internen Taktfrequenzen, welche untereinander unterschiedlich sein können und sich auch von der Referenztaktfrequenz unterscheiden können. Die Zeit in jedem Knoten wird basierend auf der entsprechenden Uhr des jeweiligen Knotens gemessen, d.h. mit der entsprechenden Taktfrequenz der Uhr des betrachteten Knotens.

Gemäß dem Diagramm der Fig. 2 sendet der Master-Knoten MA periodisch Synchronisationsnachrichten SY (k), SY(k+1) usw. in aufeinander folgenden Synchronisationszyklen aus, wobei eine jeweilige Synchronisationsnachricht den zeitgestempelten ersten Taktzählzustand $M_0^{out}(k)$ bzw. $M_0^{out}(k+1)$ enthält. Aufgrund von Quantisierungsfehlern oder Bearbeitungsfluktuationen kann sich der Zeitstempel dabei von dem wahren Taktzählzustand unterscheiden. Die Synchronisationsnachrichten werden im Netz propagiert und jeder Slave-Knoten aktualisiert die entsprechende Synchronisationsnachricht mit einem von ihm geschätzten ersten Taktzählzustand zum Aussendezeitpunkt im entsprechenden Slave-Knoten. Dieser erste Taktzählzustand ist in Fig. 2 für die Synchronisationsnachricht SY(k) in Bezug auf den Slave-Knoten SL1 mit $\hat{M}_1^{out}(k)$ bezeichnet. Darüber hinaus ist in Fig. 2 der zeitgestempelte zweite Taktzählzustand zum Aussendezeitpunkt der Synchronisationsnachricht SY(k) im Slave-Knoten SL1 mit Bezugszeichen $s_1^{out}(k)$ angedeutet. Im Folgenden bezeichnen dabei Variablen, welche mit einem Dach versehen sind, Schätzwerte der jeweiligen Variablen. Bei Empfang einer Synchronisationsnachricht erzeugt ein Slave-Knoten SLn eine zeitgestempelten zweiten Taktzählzustand $s_n^{in}(k)$ basierend auf seiner internen Uhr. In Fig. 2 sind dabei entsprechende, durch den Slave-Knoten SL1 generierte zeitgestempelte zweite Taktzählzustände mit $s_1^{in}(k)$ bzw. $s_1^{in}(k+1)$ bezeichnet. Ferner ist ein zeitgestempelter zweiter Taktzählzustand des Slave-Knotens SL2 mit Bezugszeichen $s_2^{in}(k)$ wiedergegeben. Die den zweiten Taktzuständen $s_1^{in}(k)$ bzw. $s_1^{in}(k+1)$ bzw. $s_2^{in}(k)$ entsprechenden ersten Taktzählzustände basierend auf der Referenztaktfrequenz des Master-Knotens MA sind in Fig. 2 mit $M_1^{in}(k)$ bzw. $M_1^{in}(k+1)$ bzw. $M_2^{in}(k)$ wiedergegeben.

Die Verzögerungszeit zwischen dem Senden einer Synchronisationsnachricht von dem Master-Knoten MA und dem Empfang dieser Nachricht in dem Slave-Knoten SL1 bzw. zwischen dem Senden einer Synchronisationsnachricht durch einen Slave-Knoten und deren Empfang im nächsten Slave-Knoten wird als Line-Delay bezeichnet. Diese Line-Delay wird mit einem geeigneten Schätzverfahren abgeschätzt. Im Rahmen dieses Schätzverfahrens werden zusätzlich geeignete Nachrichten zur Ermittlung der Line-Delay übertragen. In dem oben erwähnten Standard IEEE 1588 wird ein solches Schätzverfahren beschrieben, welches auch in dem hier beschriebenen erfindungsgemäßen Verfahren eingesetzt wird. Eine Beschreibung dieses Schätzverfahrens findet sich ferner in den Druckschriften [2] und [3]. Nach dem Erhalt einer Synchronisationsnachricht wird nach Ablauf einer Bridge-Delay, welche die interne Verarbeitungszeit in einem Knoten repräsentiert, eine neue Synchronisationsnachricht von einem Slave-Knoten an den nächsten Slave-Knoten gesendet. Diese Synchronisationsnachricht enthält den bereits oben erwähnten geschätzten ersten Taktzählzustand zum Aussendezeitpunkt im entsprechenden Slave-Knoten.

Bei der anhand von Fig. 1 und Fig. 2 beschriebenen Synchronisation tritt das Problem auf, dass bei der zeitlichen Abstimmung der einzelnen Uhren aufeinander Unsicherheiten auftreten, welche durch Messfehler, Fluktuationen, Quantisierungsfehler, zufälligen Frequenzdrifts und dergleichen verursacht werden. Aufgrund dieser Fehler ist die Synchronisation der internen Uhren der Slave-Knoten auf die Referenzuhr des Master-Knotens oftmals nicht hinreichend genau, was in solchen Anwendungen problematisch ist, welche eine genaue Abstimmung der Uhren bei der Durchführung von kombinierten Prozessen über die Knoten des Netzes erfordern. Insbesondere im Bereich von industriellen Automatisierungsprozessen ist eine exakte Synchronisation der Uhren zwischen den Knoten sehr wichtig.

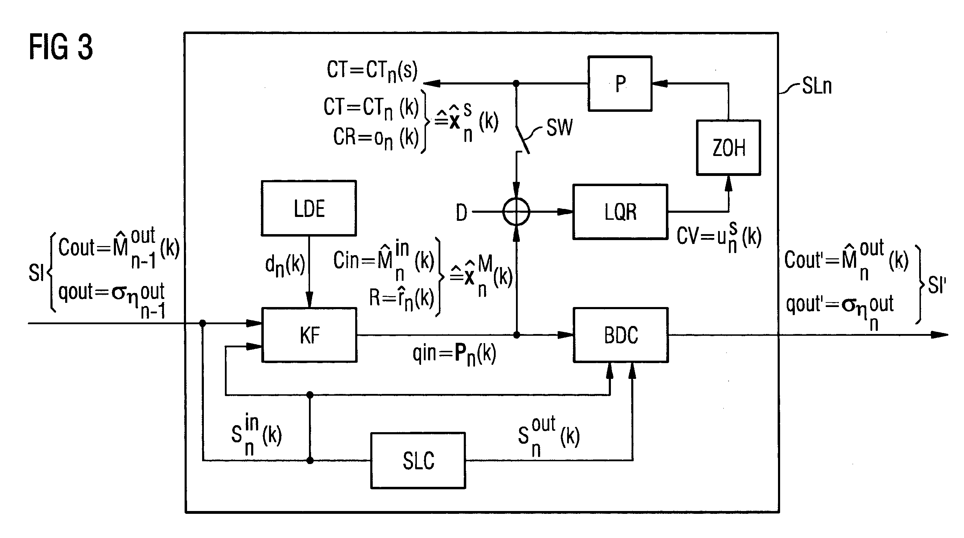

Um eine solche exakte Synchronisation zu erreichen, wird in der nachfolgend beschriebenen Ausführungsform des erfindungsgemäßen Verfahrens in den jeweiligen zweiten Knoten ein stochastischer Zustandsschätzer in der Form eines Kalman-Filters mit einem Regelkreis basierend auf einem sog. Linear-Quadratischen Regulator kombiniert, wie im Folgenden anhand von Fig. 3 näher erläutert wird. Zunächst werden jedoch einige Definitionen eingeführt, welche in der nachfolgenden Beschreibung der Fig. 3 verwendet werden.

Die Definitionen lauten wie folgt:

$r_n(k)$: Das k-te RFC-Verhältnis, das im Folgenden auch als Kompensationsfaktor bezeichnet wird und das Frequenzverhältnis der Referenztaktfrequenz der Referenzuhr zur Taktfrequenz der internen Uhr des Slave-Knotens SLn im k-ten Synchronisationszyklus repräsentiert. $s_n^{in}(k)$: Der zeitgestempelte zweite Taktzählzustand des Slave-Knotens SLn, wenn die k-te Synchronisationsnachricht im Slave-Knoten SLn ankommt. $M_n^{in}(k)$: Der erste Taktzählzustand des Master-Knotens zu dem Zeitpunkt, wenn der zweite Taktzählzustand des Slave-Knotens SLn den Wert $s_n^{in}(k)$ aufweist. $s_n^{out}(k)$: Der zeitgestempelte zweite Taktzählzustand des Slave-Knotens SLn, wenn die k-te Synchronisationsnachricht von dem Slave-Knoten SLn ausgesendet wird. $\hat{M}_n^{out}(k)$: Der im Slave-Knoten SLn geschätzte erste Taktzählzustand des Master-Knotens zu dem Zeitpunkt, wenn der zweite Taktzählzustand des Slave-Knotens SLn den Wert $s_n^{out}(k)$ aufweist. $a_n(k) = s_n^{in}(k+1) - s_n^{in}(k)$: Die lokale Zeitdifferenz zwischen dem Eintreffen zweier aufeinander folgender Synchronisationsnachrichten in dem Slave-Knoten SLn, gemessen in zweiten Taktzählzuständen der internen Uhr des Slave-Knotens SLn.

$b_n(k) = s_n^{out}(k) - s_n^{in}(k)$: Die Bridge-Delay in der lokalen Zeit gemäß den zweiten Taktzählzuständen des Slave-Knotens SLn.

$d_n(k)$: Die Line-Delay in der lokalen Zeit gemäß den zweiten Taktzählzuständen des Slave-Knotens SLn.

Fig. 3 zeigt in schematischer Darstellung den Aufbau des n-ten Slave-Knotens SLn, der in der Kette der ausgehend vom Master-Knoten übertragenen Synchronisationsnachrichten an der n-ten Stelle liegt. In dem Szenario der Fig. 3 empfängt der Slave-Knoten SLn eine Synchronisationsnachricht, welche entsprechende Synchronisationsinformationen SI enthält und sendet nach der im Folgenden beschriebenen Verarbeitung eine neue Synchronisationsnachricht mit entsprechender Synchronisationsinformation SI' aus. Die in Fig. 1 gezeigten Komponenten ermöglichen dabei die Generierung einer synchronisierten geregelten Zeit, welche als CT bezeichnet ist. Demgegenüber ist die interne freilaufende Uhr des Slave-Knotens SLn in Fig. 1 mit SLC bezeichnet.

Zum Abschätzen des ersten Taktzählzustands beim Empfang der Synchronisationsnachricht wird im Slave-Knoten SLn zunächst die Synchronisationsinformation SI der empfangenen Synchronisationsnachricht einem lokalen Kalman-Filter KF zugeführt. Die Synchronisationsinformation umfasst hierbei einen im vorhergehenden Slave-Knoten geschätzten ersten Taktzählzustand $Cout = \hat{M}_{n-1}^{out}(k)$ mit entsprechender Varianz $qout = \sigma_{\eta_{n-1}^{out}}$. Dieser geschätzte erste Taktzählzustand wird im vorhergehenden Slave-Knoten in der gleichen Weise ermittelt, wie der geschätzte erste Taktzählzustand im Slave-Knoten SLn für die Synchronisationsinformation SI' ermittelt wird. Das Kalman-Filter KF, dessen genereller Aufbau aus dem Stand der Technik bekannt ist, schätzt basierend auf einem Zustandsraummodell, welches weiter unten noch näher erläutert wird, sowohl den ersten Taktzählzustand $Cin = \hat{M}_n^{in}(k)$ als auch den Kompensationsfaktor $R = \hat{r}_n(k)$ mit entsprechender Kovarianzmatrix $qin = P_n(k)$ zum Zeitpunkt des Empfangs der Synchronisationsnachricht mit der Synchronisationsinformation SI im Slave-Knoten SLn. Zur Durchführung der Schätzung mit dem Kalman-Filter werden als weitere Größen die Line-Delay $d_n(k)$ verwendet, welche in einem Line-Delay-Schätzer LDE mit an sich bekannten Schätzverfahren ermittelt wird. Ferner verwendet der Kalman-Filter KF mit der internen Uhr SLC gemessene zeitgestempelte zweite Taktzählzustände $s_n^{in}(k)$, um basierend darauf die obige Größe

$$a_n(k) = s_n^{in}(k+1) - s_n^{in}(k)$$ zu bestimmen.

Die geschätzten Werte Cin und R, welche Ausgangsgrößen des Kalman-Filters KF darstellen und den Zustandsvektor $\hat{\mathbf{x}}_n^M(k)$ bilden, werden anschließend einem optimalen Linear-Quadratischen Regulator LQR zugeführt, der im Folgenden auch als LQR-Regler bezeichnet wird und mit dem ein geregelter erster Taktzählzustand CT und ein geregelter Kompensationsfaktor CR basierend auf einer Regelstrecke PL ermittelt wird, wie noch näher beschrieben wird. Die LQR-Regelung ist dabei generell aus dem Stand der Technik bekannt und die spezielle Ausführungsform des in Fig. 3 verwendeten Reglers wird weiter unten noch näher mathematisch beschrieben. Der Regler LQR erhält über das Differenzglied D die geschätzten Werte Cin und R. Die Stellgröße $CV = u_n^s(k)$ des Reglers repräsentiert dabei einen Korrekturterm für den geregelten Kompensationsfaktor $CR = o_n(k)$. Diese diskrete Stellgröße, welche zum Zeitpunkt des Empfangs einer neuen Synchronisationsnachricht aktualisiert wird, wird einem ZOH-Glied zugeführt (ZOH = Zero Order Hold). Dieses Glied ist hinlänglich aus dem Stand der Technik bekannt und erzeugt aus den diskreten Werten des Korrekturterms eine kontinuierliche Treppenfunktion. Der Ausgang des ZOH-Glieds wird schließlich der Regelstrecke PL (PL = Plant) zugeführt, aus der eine geregelte Zeit $CT = CT_n(k)$ in der Form eines geregelten ersten Taktzählzustands sowie der mit dem Korrekturterm korrigierte geregelte Kompensationsfaktor CR ermittelt wird. Dabei kann die geregelte Zeit auch für Zwischenwerte zwischen den Zeitpunkten von zwei empfangenen Synchronisationsnachrichten angegeben werden, was in Fig. 3 durch die Gleichung $CT = CT_n(s)$ angedeutet ist (siehe auch Gleichung (34)). Der geregelte erste Taktzählzustand CT, der durch die Dynamik der Regelstrecke PL erhalten wird, ist der synchronisierte Taktzählzustand des Slave-Knotens.

In Fig. 3 wird ferner durch einen Schalter SW wiedergegeben, dass der geregelte erste Taktzählzustand CT ferner dem Differenz-Glied D bei jeder Neuberechnung von Cin, ausgelöst durch eine neue empfangene Synchronisationsnachricht, zugeführt wird, wobei das Glied D die Differenz zwischen Cin und CT sowie zwischen R und CR berechnet. Diese Differenz wird anschließend dem LQR-Regler zugeführt.

Damit der Slave-Knoten der Fig. 3 wieder eine geeignete Synchronisationsinformation für eine auszusendende Synchronisationsnachricht erzeugt, werden die Ausgaben Cin und qin des Kalman-Filters KF der Komponente BDC zugeführt, welche die Bridge-Delay kompensiert und somit aus dem geschätzten ersten Taktzählzustand $Cin = \hat{M}_n^{in}(k)$ und dem geschätzten Kompensationsfaktor $R = \hat{r}_n(k)$ zum Zeitpunkt des Eingangs der Synchronisationsnachricht und der zugehörigen Kovarianz qin einen geschätzten ersten Taktzählzustand $Cout' = \hat{M}_n^{out}(k)$ zum Zeitpunkt des Aussendens der nächsten Synchronisationsnachricht mit zugehöriger Varianz $qout' = \sigma_{\eta_n^{out}}$ generiert. Diese generierten Wer-te werden als neue Synchronisationsinformation SI' in der durch den Slave-Knoten SLn ausgesendeten Synchronisationsnachricht integriert. Die durch die Komponente BDC durchgeführte Berechnung wird weiter unten näher erläutert. Es werden dabei neben der Ausgabe des Kalman-Filters KF ferner in der lokalen Zeit des Slave-Knotens gemessene zweite Taktzählzustände $s_n^{in}(k)$ und $s_n^{out}(k)$ verwendet, um die Bridge-Delay $b_n(k)$ zu bestimmen.

Im Folgenden werden die einzelnen, durch die Komponenten der Fig. 3 durchgeführten Berechnungen im Detail erläutert. Zunächst wird das dabei verwendete Modell zur Beschreibung der Dynamik der Master-Zeit gemäß dem ersten Taktzählzustand für den Slave-Knoten SLn beschrieben. Diese Dynamik wird nachfolgend auch als Mater-Dynamik bezeichnet. Wie sich aus Fig. 2 ergibt, entspricht die Differenz $M_n^{in}(k+1) - M_n^{in}(k)$ bzw. die Differenz $s_n^{in}(k+1) - s_n^{in}(k)$ dem gleichen Zeitintervall gemessen in der Master-Zeit gemäß der Referenztaktfrequenz bzw. der Slave-Zeit gemäß der Taktfrequenz der internen Uhr des Slave-Knotens SLn. Die oben definierte Größe

$$a_n(k) = s_n^{in}(k+1) - s_n^{in}(k) \qquad (1)$$

beschreibt dabei die Anzahl an lokalen zweiten Taktzählzuständen zwischen zwei ankommenden Synchronisationsnachrichten. Basierend darauf kann die Master-Dynamik aus Sicht des Slave-Knotens SLn wie folgt beschrieben werden:

$$M_n^{in}(k+1) = M_n^{in}(k) + a_n(k) \cdot r_n(k) \qquad (2).$$

Der bereits oben definierte Kompensationsfaktor $r_n(k)$ kompensiert dabei die Frequenzdifferenz zwischen der Master-Zeit des Master-Knotens und der internen Uhr des Slave-Knotens. Der Kompensationsfaktor $r_n$ ist selbst eine dynamische Variable, welche von der zeitlichen Entwicklung der Frequenzen des Master-Knotens MA und des Slave-Knotens SLn abhängt. Diese Frequenzen werden wiederum durch externe Störungen, wie z.B. Temperaturänderungen, Vibrationen etc., verändert. In der hier beschriebenen Ausführungsform der Erfindung wird der Kompensationsfaktor $r_n$ als Zufallsbewegung (englisch: random walk) wie folgt modelliert:

$$r_n(k+1) = r_n(k) + \omega_n(k) \qquad (3).$$

Dabei repräsentiert $\omega_n$ ein Gaußsches weißes Rauschen mit einer geeigneten Standardabweichung, wie weiter unten noch näher beschrieben wird. Im Unterschied zu dem aus den Referenzen [3] und [4] bekannten Verfahren umfasst der modellierte Zustandsraum nunmehr neben dem ersten Taktzählzustand auch den Kompensationsfaktor. Der Zustand des Master-Knotens ist somit zweidimensional und wird durch folgenden Vektor beschrieben:

$$\mathbf{x}_n^M(k) = \begin{bmatrix} M_n^{in}(k) & r_n(k) \end{bmatrix}^T \qquad (4).$$

Die Master-Dynamik kann dabei durch folgende Gleichung beschrieben werden, welche das Zustandsübergangsmodell darstellt, das im weiter unten beschriebenen Kalman-Filter verarbeitet wird:

$$S^M : \mathbf{x}_n^M(k+1) = \underbrace{\begin{bmatrix} 1 & a_n(k) \\ 0 & 1 \end{bmatrix}}_{\mathbf{A}_n(k)} \mathbf{x}_n^M(k) + \underbrace{\begin{bmatrix} 0 \\ 1 \end{bmatrix}}_{\mathbf{B}^\omega} \omega_n(k) \qquad (5).$$

Eine Synchronisation des Slaves SLn auf die Master-Zeit, welche optimal das Wissen über die obige Master-Dynamik $S^M$ verwendet, wird dadurch erreicht, dass die Master-Dynamik von einem virtuellen, lokal im Slave-Knoten SLn vorhandenen Modell dieser Dynamik gefolgt wird. Basierend darauf wird ein lokaler Zustandsvektor im Slave-Knoten SLn mit folgenden geregelten Größen eingeführt:

$$\mathbf{x}_n^S(k) = \begin{bmatrix} CT_n(k) & o_n(k) \end{bmatrix}^T \qquad (6).$$

Dabei entspricht $CT_n$ der bereits oben erwähnten geregelten Zeit (CT = Control Time), welche die momentane Schätzung der Master-Zeit bei Empfang einer Synchronisationsnachricht darstellt. Diese geregelte Zeit wird im Rahmen des hier beschriebenen Verfahrens ermittelt und stellt die synchronisierte Zeit dar. Die obige Größe $o_n$ repräsentiert dabei den geregelten Kompensationsfaktor, der auch als OFC (OFC = Offset Compensation Factor) bezeichnet wird. Er stellt eine Schätzung des RFC-Verhältnisses dar und kompensiert die Frequenzunterschiede und den Versatz der Taktzählzustände zwischen dem Slave-Knoten SLn und dem Master-Knoten MA. Das lokale virtuelle Modell der Master-Dynamik hat die gleiche dynamische Struktur wie die Master-Dynamik $S^M$. Im Unterschied zur Master-Dynamik ist es jedoch rauschfrei, da es ein virtuelles Modell ist, welches gesteuert werden kann, um zu erreichen, dass dieses Modell der Master-Dynamik folgt. Das lokale virtuelle Modell im Slave-Knoten SLn, welches im Folgenden auch als Slave-Dynamik bezeichnet wird, wird somit durch folgende Gleichung beschrieben:

$$S^S : \mathbf{x}_n^S\left(k+1\right) = \mathbf{A}_n\left(k\right)\mathbf{x}_n^S\left(k\right) + \underbrace{\begin{bmatrix} 0 \\ 1 \end{bmatrix}}_{\mathbf{B}} u_n^S\left(k\right) \qquad (7).$$

In diesem Modell wird der Korrekturterm bzw. die Korrekturvariable $u_n^S$ eingeführt, welche die Slave-Dynamik in der gleichen Weise beeinflusst, wie die Master-Dynamik durch das Prozessrauschen $\omega_n$ beeinflusst wird.

Um zu erreichen, dass der Master-Zustandsvektor $\mathbf{x}_n^M$ von dem lokalen Slave-Zustandsvektor $\mathbf{x}_n^S$ gefolgt wird, muss folgendes Differenzsignal stabilisiert werden:

$$\mathbf{x}_n^D := \mathbf{x}_n^M - \mathbf{x}_n^S \qquad (8).$$

Aufgrund der identischen Struktur von der Master-Dynamik $S^M$ und der Slave-Dynamik $S^S$ (vgl. (5) und (7)), kann das Differenzmodell wie folgt geschrieben werden:

$$S^D : \mathbf{x}_n^D\left(k+1\right) = \mathbf{A}_n\left(k\right)\mathbf{x}_n^D\left(k\right) + \mathbf{B}u_n^D\left(k\right) + \mathbf{B}^\omega \omega_n\left(k\right) \qquad (9).$$

Dabei ist die Eingangsgröße in diesem Differenzmodell wie folgt definiert:

$$u_n^D\left(k\right) := u_n^M\left(k\right) - u_n^S\left(k\right) = -u_n^S\left(k\right) \qquad (10).$$

Die Größe $u_n^M\left(k\right)$ wird dabei auf Null gesetzt, da die Master-Dynamik keinen Regeleingang aufweist. Das Differenzmodell $S^D$ ist genauso wie die Modelle $S^M$ und $\mathbf{S}^S$ ein ereignisgetriebenes System, was dazu führt, dass die oben definierte Matrix $A_n(k)$ zeitlich veränderlich ist. Bei der weiter unten beschriebenen Regelung basierend auf einem linear-quadratischen Regulator wird das Modell $S^D$ näherungsweise als zeitinvariant angenommen, d.h. die obige Größe $a_n(k)$ wird als konstant angenommen.

Zur Stabilisierung des Differenzmodells $S^D$ wird in der hier beschriebenen Ausführungsform die folgende LQR-Kostenfunktion minimiert:

$$J = \sum_n \left(\mathbf{x}_n^D\left(k\right)^T \mathbf{Q}\mathbf{x}_n^D\left(k\right) + u_n^D\left(k\right)ru_n^D\left(k\right)\right) \qquad (11).$$

Dabei bezeichnen $\mathbf{Q}$ und $r$ Gewichtungsparameter, die durch den Fachmann geeignet festgelegt werden können. Da die Dynamik $S^D$ linear ist, kann das Problem mit einem an sich bekannten Linear-Quadratischen Regulator gelöst werden. Da der Linear-Quadratische Regulator ein Zustands-Rückkopplungs-Regler ist, benötigt er Wissen über den Zustand $\mathbf{x}_n^D$. Der Zustand $\mathbf{x}_n^D$ kann jedoch nicht direkt gemessen werden, sondern lediglich eine verrauschte Beobachtung dieses Zustands. Aus dieser Beobachtung, welche weiter unten in Gleichung (13) definiert wird und Messrauschen enthält, kann ein Schätzwert $\hat{\mathbf{x}}_n^D$ des Zustandsvektors $\mathbf{x}_n^D$ mit Hilfe eines Kalman-Filters ermittelt werden.

In dem Differenzsignal $\mathbf{x}_n^D := \mathbf{x}_n^M - \mathbf{x}_n^S$ ist der Zustand $\mathbf{x}_n^S$ nicht durch Rauschen gestört, da es sich um eine virtuelle Variable handelt, welche exakt im Slave-Knoten Sln bekannt ist. Deshalb muss nur der Master-Zustand $\mathbf{x}_n^M$ aus einer entsprechenden verrauschten Beobachtung $y_n$ dieses Zustands abgeschätzt werden. Diese Abschätzung wird durch den weiter unten beschriebenen Kalman-Filter vorgenommen. Da die Master-Dynamik unabhängig von dem obigen Steuersignal $u_n^D$ ist, kann der Master-Zustand $\mathbf{x}_n^M$ außerhalb der entsprechenden Regelschleife abgeschätzt werden. Das Kalman-Filter kann somit außerhalb der Regelschleife angeordnet werden, was den Vorteil hat, dass diese Struktur kompatibel mit dem Konzept einer transparenten Uhr ist, die nicht durch eine Regelung gestört ist. Dieses Konzept ist insbesondere in dem oben erwähnten Standard IEEE 1588v2 realisiert, so dass die hier beschriebene Erfindung kompatibel mit diesem Standard ist.

Dadurch, dass die Schätzung des Master- Zustands $\mathbf{x}_n^M$ nicht Bestandteil der Regelschleife ist, beschreibt die Regelstrecke, welche in Fig. 3 mit PL bezeichnet ist, nicht das Differenzmodell $S^D$, sondern nur die Slave- Dynamik $S^S$. Demzufolge muss das Steuersignal $u_n^D$, welches durch den Linear- Quadratischen Regulator generiert wird, in das Steuersignal $u_n^S$ gewandelt werden, welches die Stellgröße CV des Regulators darstellt. Dies kann gemäß obiger Gleichung (10) durch Multiplikation mit- 1 erreicht werden.

Im Folgenden wird nunmehr die Schätzung des Zustands basierend auf der Master-Dynamik $S^M$ aus Gleichung (5) mit Hilfe des Kalman-Filters KF der Fig. 3 beschrieben. Die dem Kalman-Filter dabei zur Verfügung stehenden Beobachtungen sind die entsprechenden Synchronisationsnachrichten mit den Synchronisationsinformationen SI, welche von dem Slave-Knoten SLn empfangen werden. Wie bereits oben dargelegt, enthält diese Synchronisationsinformation den im vorhergehenden Slave-Knoten geschätzten ersten Taktzählzustand $\hat{M}_{n-1}^{out}(k)$ zum Zeitpunkt des Aussendens der Synchronisationsnachricht. Der tatsächliche Wert $M_{n-1}^{out}(k)$ dieses ersten Taktzählzustands ist dabei über die Line-Delay $d_n(k)$ mit dem ersten Taktzählzustand bei Empfang der Synchronisationsnachricht im Slave-Knoten SLn wie folgt verknüpft:

$$M_n^{in}(k) = M_{n-1}^{out}(k) + d_n(k) r_n(k) \qquad (12).$$

Somit kann das Beobachtungsmodell des Kalman-Filters wie folgt geschrieben werden:

$$y_n^M(k) := \hat{M}_{n-1}^{out}(k) = M_n^{in}(k) - d_n(k) \cdot r_n(k) + \text{Rauschen} = \underbrace{\left[1 - \hat{d}_n(k)\right]}_{C_n(k)} \mathbf{x}_n^M(k) + v_n(k)$$

$$(13).$$

Das Paar $(A_n(k), C_n(k))$ ist für alle realistischen Werte von $a_n(k)$ und $\hat{d}_n(k)$ beobachtbar, so dass der Zustand $\mathbf{x}_n^M(k)$ rekonstruiert werden kann.

Damit der Kalman-Filter KF der Fig. 3 optimal arbeitet, muss das Beobachtungsrauschen $v_n$ und das Prozess-

rauschen $\omega_n$ geeignet quantifiziert werden. Eine Analyse des Beobachtungsprozesses zeigt, dass $v_n$ gemäß nachfolgender Gleichung in verschiedene Rauschterme aufgeteilt werden kann, wobei die Zeitindizes k aus Klarheit weggelassen sind:

$$v_n = \eta_{n-1}^{out} + \xi_{n-1} + \eta_{d,n} \cdot r_n \qquad (14).$$

Ferner kommen Effekte zweiter Ordnung hinzu, die vernachlässigt werden können.

Im Folgenden werden die Terme der Gleichung (14) näher erläutert:

- $\eta_{n-1}^{out}$ ist der Hauptbeitrag zum Beobachtungsrauschen. Dieser Beitrag entspricht dem Fehler in der Schätzung der Master-Zeit im Slave-Knoten SL(n-1). Die Varianz dieses Fehlers wird automatisch während des Schätzprozesses des Kalman-Filters im Slave-Knoten SL(n-1) geschätzt und an den Slave-Knoten SLn als Variable *qout* innerhalb der Synchronisationsinformation SI übergeben.

- $\xi_{n-1}$ ist das sog. Stamping-Jitter, welches durch das Zeitstempeln hervorgerufen wird. Dieses Jitter tritt auf, wenn die Synchronisationsnachricht vom Slave-Knoten SL(n-1) ausgesendet wird. Die Ermittlung dieser Größe liegt im Rahmen von fachmännischem Handeln. Sie kann auf einfache Weise aus den Hardware-Eigenschaften des entsprechenden Slave-Knotens abgeleitet werden.

- $\eta_{d,n}$ ist der Fehler im Line-Delay, der durch den verwendeten Schätzprozess dieser Größe verursacht wird. Dieser Fehler beeinflusst die Beobachtung $y_n^M$ über die Modell-Unsicherheit der Beobachtungsmatrix $C_n$. Der Fehler hängt somit vom verwendeten Schätzprozess der Line-Delay ab.

Basierend auf den obigen Betrachtungen kann durch den Fachmann ein geeigneter Rauschterm $v_n$ für das Beobachtungsrauschen in der Form eines Gaußschen Rauschterms mit entsprechender Varianz $\sigma_{v_n}$ festgelegt werden. Im Unterschied zu dem Beobachtungsrauschen reflektiert das Prozessrauschen $\omega_n$ die Tatsache, dass das RFC-Verhältnis nicht fest ist, sondern sich durch externe Störungen in den Knoten verändert. Diese Effekte werden in der hier beschriebenen Ausführungsform grob durch ein Gaußsches additives Rauschen approximiert, wobei die Wahl einer entsprechenden Varianz $\sigma_{\omega_n}$ für dieses Rauschen im Rahmen von fachmännischem Handeln liegt.

Basierend auf dem Zustandsübergangsmodell $S^M$ aus Gleichung (5) und dem Beobachtungsmodell aus Gleichung (13) sowie der geeignet quantifizierten Varianzen $\sigma_{v_n}$ und $\sigma_{\omega_n}$ kann die Schätzung basierend auf dem Kalman-Filter in an sich bekannter Weise abgeleitet werden. Die durch das Kalman-Filter KF der Fig. 3 durchgeführte Schätzung wird im Folgenden kurz dargelegt.

Im Rahmen der Schätzung wird folgende Matrix eingeführt:

$$\mathbf{Q}_n(k) = \begin{bmatrix} 0 & 0 \\ 0 & \sigma_{\omega_n}(k) \end{bmatrix} \qquad (15).$$

Ferner bezeichnet nachfolgend $P_n(k)$ die Kovarianzmatrix. Der Schätzprozess besteht aus den folgenden Berechnungen.

Gemäß dem Kalman-Filter wird zunächst ein Zustand wie folgt vorhergesagt:

$$\hat{\mathbf{x}}_n^{M,-}(k) = \mathbf{A}_n(k-1)\hat{\mathbf{x}}_n^M(k-1) \qquad (16).$$

Die vorhergesagte Varianz lautet dabei wie folgt:

$$\mathbf{P}_n^-\left(k\right) = \mathbf{A}_n\left(k-1\right)\mathbf{P}_n\left(k-1\right)\mathbf{A}_n\left(k-1\right)^T + \mathbf{Q}_n\left(k-1\right) \qquad (17).$$

Das Kalman-Gain wird basierend auf folgender Gleichung ermittelt:

$$\mathbf{L}_n\left(k\right) = \mathbf{P}_n^-\left(k\right)\mathbf{C}_n\left(k\right)^T\left(\mathbf{C}_n\left(k\right)\mathbf{P}_n^-\left(k\right)\mathbf{C}_n\left(k\right)^T + \sigma_{v_n}\left(k\right)\right)^{-1} \qquad (18).$$

Hieraus ergibt sich dann folgender aktualisierter Wert für den Zustand, wobei $y_n(k)$ der obigen Größe $\hat{M}_{n-1}^{out}\left(k\right)$ aus der empfangenen Synchronisationsnachricht entspricht:

$$\hat{\mathbf{x}}_n^M\left(k\right) = \hat{\mathbf{x}}_n^{M,-}\left(k\right) + \mathbf{L}_n\left(k\right)\left(y_n\left(k\right) - \mathbf{C}_n\left(k\right)\hat{\mathbf{x}}_n^{M,-}\left(k\right)\right) \qquad (19).$$

Die aktualisierte Varianz lautet dabei wie folgt:

$$\mathbf{P}_n\left(k\right) = \left(\mathbf{I} - \mathbf{L}_n\left(k\right)\mathbf{C}_n\left(k\right)\right)\mathbf{P}_n^-\left(k\right) \qquad (20).$$

Das Kalman-Filter schätzt somit den entsprechenden ersten Taktzählzustand $M_n^{in}\left(k\right)$, wenn die Synchronisationsnachricht in dem Slave-Knoten SLn ankommt. Ferner liefert das Kalman-Filter einen geschätzten Kompensationsfaktor $\hat{r}_n(k)$. Für die nächste, durch den Slave-Knoten SLn auszusendende Synchronisationsnachricht muss ferner eine Abschätzung des ersten Taktzählzustands $M_n^{out}\left(k\right)$ ermittelt werden, welche dann in der nächsten Synchronisationsnachricht enthalten ist. Der Wert dieser Abschätzung wird basierend auf folgender Gleichung ermittelt:

$$\hat{M}_{n-1}^{out}\left(k\right) = \hat{M}_n^{in}\left(k\right) + b_n\left(k\right)\hat{r}_n\left(k\right) \qquad (21).$$

Die Berechnung gemäß obiger Gleichung (21) wird dabei durch die Einheit BDC aus Fig. 3 durchgeführt. Die entsprechende Varianz *qout',* welche ebenfalls in der nächsten Synchronisationsnachricht integriert ist, wird als die Unsicherheit der Abschätzung der Master-Zeit bei Empfang der Synchronisationsnachricht plus der Varianz in dem angenommenen Bridge-Delay, welche durch die Unsicherheit im RFC-Verhältnis hervorgerufen wird, abgeschätzt. Es ergibt sich somit folgende Varianz $\sigma_{\eta_n^{out}}$ für *qout',* wobei $p^{x,y}$ entsprechende Einträge der Kovarianzmatrix P bezeichnet:

$$\sigma_{\eta_n^{out}} = p_n^{1,1} + b_n^2 \cdot p_n^{2,2} \qquad (22).$$

Diese Varianz sowie der geschätzte erste Taktzählzustand $\hat{M}_n^{out}\left(k\right)$ aus dem Zustandsvektor $\hat{\mathbf{x}}_n^M\left(k\right)$ der Gleichung (19) werden als Synchronisationsinformation SI' in die vom Slave-Knoten SLn ausgesendete Synchronisationsnachricht aufgenommen.

Im Folgenden wird nunmehr die Regelung basierend auf dem Linear-Quadratischen Regulator der Fig. 3 erläutert. Der Regelung liegt die oben beschriebene Slave-Dynamik $S^S$ aus Gleichung (7) zu Grunde. Wie bereits oben erwähnt, wird ein zeitinvariantes System angenommen, welches die Verwendung der stationären Form des Linear-Quadratischen Regulators ermöglicht. In diesem zeitinvarianten System wird die Anzahl an zweiten Taktzählzuständen des Slave-Knotens SLn zwischen zwei Synchronisationsnachrichten als konstant angenommen wird, d.h. es gilt:

$$a_n\big(k\big) \equiv a_n \qquad (23).$$

Dies führt zu einer zeitinvarianten Slave-Dynamik, welche wie folgt lautet:

$$S^{S,inv} : \mathbf{x}_n^S\big(k+1\big) = \mathbf{A}\mathbf{x}_n^S\big(k\big) + \mathbf{B}u_n^S\big(k\big) \qquad (24).$$

Zur Realisierung eines Linear-Quadratischen Regulators, gemäß dem die Slave-Dynamik der Master-Dynamik folgt, wird die oben genannte Kostenfunktion gemäß Gleichung (11) minimiert. Um das sog. LQR-Gain zu ermitteln, wird folgende zeitdiskrete algebraische Riccati-Gleichung (auch unter der Bezeichnung DARE bekannt) gelöst:

$$\mathbf{P} = \mathbf{Q} + \mathbf{A}^T\left(\mathbf{P} - \mathbf{P}\mathbf{B}\big(r + \mathbf{B}^T\mathbf{P}\mathbf{B}\big)^{-1}\mathbf{B}^T\mathbf{P}\right) \qquad \texttt{2te linke ( löschen(25).}$$

Die Matrix $\mathbf{Q}$ ist dabei symmetrisch und lautet wie folgt:

$$\mathbf{Q} = \begin{bmatrix} q_1 & 0 \\ 0 & q_2 \end{bmatrix} \qquad (26).$$

Basierend auf der Matrix $\mathbf{Q}$ kann die Gleichung (25) durch folgende drei Gleichungen beschrieben werden:

$$-\frac{p_2^4}{q_1^2} + \frac{a}{q_1}p_2^3 + \frac{2r+q_2}{q_1}p_2^2 + arp_2 - r^2 = 0 \qquad (27),$$

$$p_1 = q_1 + \frac{p_2}{a} - \frac{rq_1}{ap_2} \qquad (28),$$

$$p_3 = \frac{p_2^2}{q_1} - r \qquad (29),$$

wobei

$$\mathbf{P} = \begin{bmatrix} p_1 & p_2 \\ p_2 & p_3 \end{bmatrix} \qquad (30).$$

Die obige Gleichung (27) kann nicht in geschlossener Form gelöst werden. In der hier beschriebenen Ausführungsform wird jedoch $r=0$ angenommen, was gleichbedeutend damit ist, dass eine Veränderung des geregelten Kompensationsfaktors nicht bestraft wird. Dies führt dazu, dass die Gleichung (27) wie folgt geschrieben werden kann:

$$p_2 = \frac{aq_1 + \sqrt{a^2 q_1^2 + 4q_1 q_2}}{2} \qquad (31).$$

Demzufolge kann die obige Matrix P in geschlossener Form berechnet werden.

Nachdem basierend auf den obigen Gleichungen die Matrix P ermittelt wurde, ergibt sich der LQR-Gain wie folgt:

$$\mathbf{K} = -\left(\mathbf{R} + \mathbf{B}^T \mathbf{P} \mathbf{B}\right)^{-1} \mathbf{B}^T \mathbf{P} \mathbf{A} \qquad (32).$$

Basierend darauf erhält man für die Stellgröße $u_n^S(k)$ des Reglers folgenden Wert:

$$u_n^S(k) = -\mathbf{K}\left(\hat{\mathbf{x}}_n^M(k) - \mathbf{x}_n^S(k)\right) \qquad (33).$$

Durch die oben beschriebene Kombination des Kalman-Filters mit dem LQR-Regler erhält man eine Lösung des aus dem Stand der Technik bekannten LQG-Problems (LQG = Linear-Quatratic Gaussian). Ein wichtiger Unterschied zwischen der Ausgabe des Kalman-Filters und der über den LQR-Regler ermittelten geregelten Zeit CT besteht darin, dass die geregelte Zeit in eine kontinuierliche Funktion ohne Sprünge extrapoliert werden kann. Diese Eigenschaft ist für viele Anwendungen erforderlich, welche in einem Slave-Knoten die Ausgabe der geregelten Zeit verwenden. Der mittels des Kalman-Filters abgeschätzte erste Taktzählzustand Cin bei Empfang einer Synchronisationsnachricht bis zum Empfang der nächsten Synchronisationsnachricht könnte zwar basierend auf dem abgeschätzten RCF-Verhältnis $\hat{r}_n(k)$ extrapoliert werden. Das Ergebnis dieser Extrapolation ist jedoch nicht konsistent mit der nächsten Abschätzung des Kalman-Filters aufgrund der Innovation zum Zeitpunkt k+1. Demzufolge wird die Größe Cin nicht extrapoliert. Nichtsdestotrotz kann der geregelte erste Taktzählzustand CT zwischen dem Zeitpunkt des Empfangs der k-ten Synchronisationsnachricht bis zum Zeitpunkt des Empfangs der (k+1)-ten Synchronisationsnachricht für jeden lokalen zweiten Taktzählzustand s wie folgt ermittelt werden:

$$CT_n(s) = CT_n(k) + o_n(k) \cdot \left(s - s_n^{in}(k)\right) \qquad (34).$$

Diese Extrapolation führt somit den Wert $CT_n(k)$ stetig in den nächsten diskreten Wert $CT_n(k+1)$ über, da die Slave-Dynamik ein virtueller rauschfreier Prozess ist, der nur durch den geregelten Kompensationsfaktor $o_n$ angetrieben wird.

Die in dem Slave-Knoten der Fig. 3 ermittelte geregelte Zeit $CT$ wird als Grundlage zur Ausführung entsprechender Vorgänge durch den Knoten verwendet. Die geregelte Zeit wird jedoch nicht im Rahmen des Aussendens der nächsten Synchronisationsnachricht an den nächsten Knoten weitergegeben. Stattdessen wird die über das Kalman-Filter geschätzte Zeit $\hat{M}_n^{out}$ an den nächsten Slave-Knoten übermittelt, ohne dass diese Zeit durch den LQR-Regler beeinflusst ist.

Das oben beschriebene Verfahren wurde von den Erfindern basierend auf Simulationen getestet und mit einem Standard-Verfahren verglichen, bei dem ein Slave-Knoten den ersten Taktzählzustand ohne Modellierung von Fluktuationen bei der Zeitbestimmung berechnet. Um die Performanz des erfindungsgemäßen Synchronisationsverfahrens unter realen Bedingungen zu überprüfen, wurden dabei externe Störungen in dem Netzwerk, wie Temperaturschwankungen, Vibrationen und dergleichen, simuliert. Die Simulationen wurden für ein Netzwerk aus 200 Knoten durchgeführt, welche basierend auf der Topologie gemäß Fig. 1 miteinander verbunden sind.

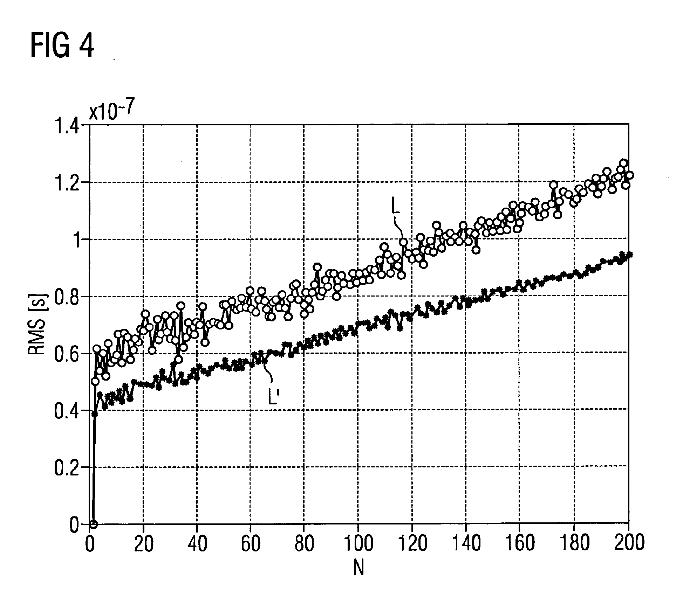

Fig. 4 zeigt ein Diagramm, welches die basierend auf den Simulationen ermittelten Ergebnisse des erfindungsgemäßen Verfahrens mit dem Standard-Verfahren vergleicht. Die Abszisse des Diagramms gibt dabei die entsprechende Nummer N des Slave-Knotens an, wobei die Nummer 0 dem Master-Knoten entspricht. Entlang der Ordinate ist die Wurzel aus dem mittleren quadratischen Fehler RMS in Sekunden zwischen der im entsprechenden Slave-Knoten bestimmten Master-Zeit zur tatsächlichen Master-Zeit wiedergegeben. Die Linie L zeigt dabei das Standard-Verfahren und die Linie L' das erfindungsgemäße Verfahren. Es wird klar aus Fig. 4 ersichtlich, dass die Ermittlung der geregelten Zeit basierend auf einem Kalman-Filter und einem LQR-Regler deutlich geringere Fehler im Vergleich zu dem Standard-Verfahren liefert. Im Falle einer angenommenen Synchronisations-Genauigkeits-Anforderung von 80 ns unterstützt das Standard-Verfahren nur 59 Slave-Knoten, wohingegen mit dem erfindungsgemäßen Verfahren 146 Slave-Knoten unterstützt werden, so dass die Performanz verdoppelt wird.

Literaturverzeichnis:

[1] Europäische Patentanmeldung Nr. 09 012 028.8

[2] C. Na, R. L. Scheiterer, D. Obradovic, A Kalman Filter Approach To Clock Synchronization Of Cascaded Network Elements, 1st IFAC Workshop on Estimation and Control of Networked Systems (NecSys'09), 24.- 26. September, 2009, Venedig, Italien.

[3] C. Na, P. Wolfrum, D. Obradovic, und R. L. Scheiterer, Optimal estimation and control of clock synchronization following the precision time protocol, Proc. of MSC 2010, Yokohama, Japan, 2010.

[4] Deutsche Patentanmeldung Nr. 10 2010 022 525.8

**Patentansprüche**

1. Verfahren zur Zeitsynchronisation in einem Kommunikationsnetz mit einer Mehrzahl von Knoten (MA, SL1, SL2, SLn), wobei die Knoten (MA, SL1, SL2, SLn) einen ersten Knoten (MA) und einen oder mehrere zweite Knoten (SL1, SL2, SLn) umfassen, wobei der erste Knoten (MA) erste Taktzählzustände gemäß einer Referenztaktfrequenz generiert und der oder die zweiten Knoten (SL1, SL2, SLn) jeweils zweite Taktzählzustände gemäß einer internen Taktfrequenz generieren, wobei eine Zeitsynchronisation in aufeinander folgenden Synchronisationszyklen durchgeführt wird, in denen jeweils Synchronisationsnachrichten (SY(k)) ausgehend von dem ersten Knoten (MA) aufeinander folgend von einem der Knoten (MA, SL1, SL2, SLn) zu einem der weiteren Knoten (MA, SL1, SL2, SLn) übertragen werden und eine von einem Knoten (MA, SL1, SL2, SLn) ausgesendete Synchronisationsnachricht (SY(k)) eine Information (SI, SI') enthält, welche zur Zeitsynchronisation im die Synchronisationsnachricht (SY(k)) empfangenden Knoten (SL1, SL2, SLn) verwendet wird,
wobei
eine Zeitsynchronisation in einem jeweiligen zweiten Knoten (SLn) zumindest eines Teils der zweiten Knoten (SL1, SL2, SLn) derart durchgeführt wird, dass

   i) ein erster Taktzählzustand (Cin) und ein Kompensationsfaktor (R), welcher ein aktuelles Taktverhältnis der Referenztaktfrequenz zur internen Taktfrequenz des jeweiligen zweiten Knotens (SLn) angibt, für einen in dem jeweiligen zweiten Knoten (SLn) gemessenen zweiten Taktzählzustand ($s_n^{in}(k)$) basierend auf einem Schätzverfahren mit Hilfe der Information (SI, SI') in einer empfangenen Synchronisationsnachricht (SY(k)) abgeschätzt werden;
   ii) aus dem abgeschätzten ersten Taktzählzustand (Cin) und dem abgeschätzten Kompensationsfaktor (R) mithilfe eines Linear-Quadratischen Regulators (LQR) ein geregelter erster Taktzählzustand (CT) und ein geregelter Kompensationsfaktor (CR) basierend auf einer Regelstrecke (PL) ermittelt werden, welche als Stellgröße (CV) einen Korrekturterm für den geregelten Kompensationsfaktor (CR) enthält, wobei der geregelte erste Taktzählzustand (CT) die synchronisierte Zeit darstellt; **gekennzeichnet dadurch, daß**

das Schätzverfahren und der Linear-Quadratische Regulator (LQR) ein zweidimensionales Modell verwenden, welches als Zustand den ersten Taktzählzustand (Cin) und den Kompensationsfaktor (CR) umfasst.

2. Verfahren nach Anspruch 1, bei dem in Schritt i) eine Variation des Kompensationsfaktors (R) basierend auf einem Zufallsprozess, insbesondere basierend auf einem Gaußschen Rauschprozess, modelliert wird.

3. Verfahren nach Anspruch 1 oder 2, bei dem die Stellgröße (CV) nach jedem Empfang einer Synchronisationsnachricht (SY(k)) in dem jeweiligen zweiten Knoten (SLn) aktualisiert wird und der Regelstrecke (PL), vorzugsweise über ein ZOH-Glied (ZOH), zugeführt wird.

4. Verfahren nach Anspruch 3, bei dem die Regelstrecke (PL) für den Linear-Quadratischen Regulator (LQR) zum Zeitpunkt des Empfangs einer Synchronisationsnachricht (SY(k)) im k-ten Synchronisationszyklus im n-ten zweiten Knoten (SLn) und unmittelbar vor einer Aktualisierung der Stellgröße (CV) wie folgt lautet:

$$\begin{bmatrix} CT_n(k) \\ o_n(k) \end{bmatrix} = \mathbf{A}_n(k-1)\begin{bmatrix} CT_n(k-1) \\ o_n(k-1) \end{bmatrix} + \begin{bmatrix} 0 \\ 1 \end{bmatrix} \cdot u_n^s(k-1)$$

wobei $CT_n(k)$ der geregelte erste Taktzählzustand (CT) zum Zeitpunkt des Empfangs der Synchronisationsnachricht (SY(k)) im k-ten Synchronisationszyklus ist;

wobei $o_n(k)$ der geregelte Kompensationsfaktor (CR) zum Zeitpunkt des Empfangs der Synchronisationsnachricht (SY(k)) im k-ten Synchronisationszyklus ist;

wobei $u_n^s(k-1)$ der im (k-1)-ten Synchronisationszyklus verwendete Korrekturterm für den geregelten Kompensationsfaktor (CR) ist;

wobei

$$\mathbf{A}_n(k-1) = \begin{bmatrix} 1 & a_n(k-1) \\ 0 & 1 \end{bmatrix};$$

wobei $a_n(k-1)$ die Zeitdifferenz zwischen zwei aufeinander folgend im jeweiligen zweiten Knoten (SLn) empfangenen Synchronisationsnachrichten (SY(k)) ist, angegeben in zweiten Taktzählzuständen gemäß der internen Taktfrequenz des n-ten zweiten Knotens (SLn).

5. Verfahren nach Anspruch 4, bei dem die Regelstrecke (PL) für den Linear-Quadratischen Regulator (LQR) nach einer Aktualisierung der Stellgröße (CV) zum Zeitpunkt des Empfangs der Synchronisationsnachricht (SY(k)) im k-ten Synchronisationszyklus im n-ten zweiten Knoten (SLn) bis zur nächsten Aktualisierung der Stellgröße (CV) wie folgt lautet:

$$CT_n(s) = CT_n(k) + o_n(k) \cdot \left(s - s_n^{in}(k)\right)$$

wobei $CT_n(s)$ der geregelte erste Taktzählzustand (CT) zum Zeitpunkt eines gemessenen zweiten Taktzählzustands s des jeweiligen zweiten Knotens (SLn) zwischen den beiden Aktualisierungen ist;

wobei $s_n^{in}(k)$ der gemessene zweite Taktzählzustand des jeweiligen zweiten Knotens (SLn) zum Zeitpunkt des Empfangs der Synchronisationsnachricht (SY(k)) im k-ten Synchronisationszyklus ist.

6. Verfahren nach einem der vorhergehenden Ansprüche, bei dem der erste Taktzählzustand (Cin) und der Kompensationsfaktor (R) in Schritt i) mit einem Schätzverfahren in der Form eines stochastischen Zustandsschätzers (KF) und insbesondere eines Kalman-Filters abgeschätzt werden.

7. Verfahren nach Anspruch 6, bei dem der erste Taktzählzustand (Cin) und der Kompensationsfaktor (R) mit einem Schätzverfahren in der Form eines Kalman-Filters (KF) abgeschätzt werden, das als Zustand den ersten Taktzählzustand (Cin) und den Kompensationsfaktor (R) zum Empfangszeitpunkt einer Synchronisationsnachricht (SY(k)) in dem jeweiligen zweiten Knoten (SLn) und eine zugehörige stochastische Varianz (qin) abschätzt und als eine Observable die Information (SI, SI') in der empfangenen Synchronisationsnachricht (SY(k)) verwendet.

8. Verfahren nach Anspruch 7, bei dem die Information (SI, SI') in einer Synchronisationsnachricht (SY(k)) einen abgeschätzten ersten Taktzählzustand (Cout, Cout') zum Aussendezeitpunkt der Synchronisationsnachricht (SY(k)) in dem jeweiligen zweiten Knoten (SLn) und eine zugehörige stochastische Varianz (qout, qout') umfasst.

9. Verfahren nach Anspruch 8, bei dem folgendes Zustandsraummodell für das Kalman-Filter (KF) im n-ten zweiten Knoten (SLn) für den k-ten Synchronisationszyklus verwendet wird:

$$\begin{bmatrix} M_n^{in}(k) \\ r_n(k) \end{bmatrix} = \mathbf{A}_n(k-1) \begin{bmatrix} M_n^{in}(k-1) \\ r_n(k-1) \end{bmatrix} + \begin{bmatrix} 0 \\ 1 \end{bmatrix} \cdot \omega_n(k-1)$$

$$\hat{M}_{n-1}^{out}(k) = \begin{bmatrix} 1 & -\hat{d}_n(k) \end{bmatrix} \begin{bmatrix} M_n^{in}(k) \\ r_n(k) \end{bmatrix} + \nu_n(k)$$

wobei $M_n^{in}(k)$ der erste Taktzählzustand (Cin) zum Empfangszeitpunkt der Synchronisationsnachricht (SY(k)) in dem n-ten zweiten Knoten im k-ten Synchronisationszyklus ist;
wobei $r_n(k)$ der Kompensationsfaktor (R) zum Empfangszeitpunkt der Synchronisationsnachricht (SY(k)) in dem n-ten zweiten Knoten im k-ten Synchronisationszyklus ist;
wobei $\hat{M}_{n-1}^{out}(k)$ der abgeschätzte erste Taktzählzustand zum Aussendezeitpunkt der Synchronisationsnachricht (SY(k)) in dem (n-1)-ten zweiten Knoten (SL(n-1)) oder im ersten Knoten (MA) im k-ten Synchronisationszyklus ist; wobei

$$\mathbf{A}_n(k-1) = \begin{bmatrix} 1 & a_n(k-1) \\ 0 & 1 \end{bmatrix};$$

wobei $a_n(k-1)$ die Zeitdifferenz zwischen zwei aufeinander folgend im jeweiligen zweiten Knoten (SLn) empfangenen Synchronisationsnachrichten (SY(k)) ist, angegeben in zweiten Taktzählzuständen gemäß der internen Taktfrequenz des n-ten zweiten Knotens (SLn);
wobei $\hat{d}_n(k)$ eine geschätzte Verzögerungszeit zwischen dem Aussendezeitpunkt der vom (n-1)-ten zweiten Knoten (SL(n-1)) ausgesendeten Synchronisationsnachricht (SY(k)) und dem Empfangszeitpunkt dieser Synchronisationsnachricht (SY(k)) im n-ten zweiten Knoten (SLn) ist, angegeben in zweiten Taktzählzuständen gemäß der internen Taktfrequenz des n-ten zweiten Knotens (SLn);
wobei $\nu_n(k)$ ein Gaußscher Rauschterm ist, der ein Beobachtungsrauschen repräsentiert;
wobei $\omega_n(k-1)$ ein Gaußscher Rauschterm ist, der ein Prozessrauschen repräsentiert.

10. Verfahren nach Anspruch 9 oder 10, bei dem aus dem durch das Kalman-Filter abgeschätzten ersten Taktzählzustand (Cin) und dem durch das Kalman-Filter abgeschätzten Kompensationsfaktor (R) zum Empfangszeitpunkt einer Synchronisationsnachricht (SY(k)) in dem jeweiligen zweiten Knoten (SLn) und der zugehörigen stochastischen Varianz (qin) der abgeschätzte erste Taktzählzustand (Cout') der nachfolgenden Synchronisationsnachricht (SY(k)) in dem jeweiligen zweiten Knoten (SLn) und die zugehörige stochastische Varianz (qout') mit Hilfe einer Knoten-Verarbeitungszeit berechnet werden und in die nachfolgende Synchronisationsnachricht (SY(k)) eingefügt werden, wobei die Knoten-Verarbeitungszeit eine in dem jeweiligen zweiten Knoten (SLn) geschätzte Verzögerungszeit zwischen dem Empfang der in dem jeweiligen zweiten Knoten (SLn) empfangenen Synchronisationsnachricht (SY(k)) und dem Aussenden der nachfolgenden Synchronisationsnachricht (SY(k)) repräsentiert.

11. Verfahren nach einem der vorhergehenden Ansprüche, bei dem die Zeitsynchronisation auf dem Standard IEEE 1588 oder IEEE1588v2 oder IEC 61588 oder IEEE 802.1AS basiert.

12. Verfahren nach einem der vorhergehenden Ansprüche, bei dem die Knoten (M1, SL1, SL2, SLn) basierend auf dem PROFINET-Standard miteinander kommunizieren.

13. Verfahren nach einem der vorhergehenden Ansprüche, bei dem das Verfahren in einem industriellen Automatisierungssystem eingesetzt wird.

**14.** Knoten zur Verwendung als zweiter Knoten (SLn) in einem Verfahren zur Zeitsynchronisation in einem Kommunikationsnetz mit einer Mehrzahl von Knoten (MA, SL1, SL2, SLn), wobei die Knoten (MA, SL1, SL2, SLn) einen ersten Knoten (MA) und einen oder mehrere zweite Knoten (SL1, SL2, SLn) umfassen, wobei der erste Knoten (MA) erste Taktzählzustände gemäß einer Referenztaktfrequenz generiert und der oder die zweiten Knoten (SL1, SL2) jeweils zweite Taktzählzustände gemäß einer internen Taktfrequenz generieren, wobei eine Zeitsynchronisation in aufeinander folgenden Synchronisationszyklen durchgeführt wird, in denen jeweils Synchronisationsnachrichten (SY(k)) ausgehend von dem ersten Knoten (MA) aufeinander folgend von einem der Knoten (MA, SL1, SL2, SLn) zu einem der weiteren Knoten (MA, SL1, SL2) übertragen werden und eine von einem Knoten (MA, SL1, SL2, SLn) ausgesendete Synchronisationsnachricht (SY(k)) eine Information (SI, SI') enthält, welche zur Zeitsynchronisation im die Synchronisationsnachricht (SY(k)) empfangenden Knoten (SL1, SL2, SLn) verwendet wird, wobei der zweite Knoten (SLn) derart ausgestaltet ist, dass er im Betrieb eine Zeitsynchronisation derart durchführt, dass

i) ein erster Taktzählzustand (Cin) und ein Kompensationsfaktor (R), welcher ein aktuelles Taktverhältnis der Referenztaktfrequenz zur internen Taktfrequenz des jeweiligen zweiten Knotens (SLn) angibt, für einen in dem zweiten Knoten (SLn) gemessenen zweiten Taktzählzustand ($s_n^{in}(k)$) basierend auf einem Schätzverfahren mit Hilfe der Information (SI, SI') in einer empfangenen Synchronisationsnachricht (SY(k)) abgeschätzt werden;
ii) aus dem abgeschätzten ersten Taktzählzustand (Cin) und dem abgeschätzten Kompensationsfaktor (R) mithilfe eines Linear-Quadratischen Regulators (LQR) ein geregelter erster Taktzählzustand (CT) und ein geregelter Kompensationsfaktor (CR) basierend auf einer Regelstrecke (PL) ermittelt werden, welche als Stellgröße (CV) einen Korrekturterm für den geregelten Kompensationsfaktor (CR) enthält, wobei der geregelte erste Taktzählzustand (CT) die synchronisierte Zeit darstellt; **gekennzeichnet dadurch, daß**

das Schätzverfahren und der Linear-Quadratische Regulator (LQR) ein zweidimensionales Modell verwenden, welches als Zustand den ersten Taktzählzustand (Cin) und den Kompensationsfaktor (CR) umfasst.

**15.** Kommunikationsnetz mit einer Mehrzahl von Knoten (MA, SL1, SL2), wobei die Knoten (MA, SL1, SL2) einen ersten Knoten (MA) und einen oder mehrere zweite Knoten (SL1, SL2, SLn) nach Anspruch 14 umfassen.

**16.** Kommunikationsnetz nach Anspruch 15, welches derart ausgestaltet ist, dass in dem Kommunikationsnetz ein Verfahren nach einem der Ansprüche 2 bis 13 durchführbar ist.

**Claims**

**1.** Method for time synchronisation in a communications network having multiple nodes (MA, SL1, SL2, SLn), wherein the nodes (MA, SL1, SL2, SLn) comprise a first node (MA) and one or more second nodes (SL1, SL2, SLn), where the first node (MA) generates first cycle counter states according to a reference clock frequency and the second node or nodes (SL1, SL2, SLn) each generate second cycle counter states in accordance with an internal clock frequency, where a time synchronisation is carried out in sequential synchronisation cycles, in which synchronisation messages (SY(k)) originating from the first node (MA) are sequentially transmitted from one of the nodes (MA, SL1, SL2, SLn) to one of the other nodes (MA, SL1, SL2, SLn), and a synchronisation message (SY(k)) transmitted by a node (MA, SL1, SL2, SLn) contains information (SI, SI') used for time synchronisation in the node (SL1, SL2, SLn) receiving the synchronisation message (SY(k)), where
a time synchronisation in a given second node (SLn) of at least a part of the second nodes (SL1, SL2, SLn) is implemented in such a manner that

i) a first cycle counter state (Cin) and a compensation factor (R), which represents a current clock ratio of the reference clock frequency to the internal clock frequency of the given second node (SLn), are estimated for a second cycle counter state ($s_n^{in}(k)$) measured in the given second node (SLn), on the basis of an estimation procedure with the aid of the information (SI, SI') contained in a received synchronisation message (SY(k));
ii) a regulated first cycle counter state (CT) and a regulated compensation factor (CR) based on a control loop (PL) are determined from the estimated first cycle counter state (Cin) and the estimated compensation factor (R) by means of a linear quadratic regulator (LQR), which contains a correction term for the regulated compensation factor (CR) as a manipulating variable (CV), where the regulated first cycle counter state (CT) represents the synchronised time;

**characterised in that**
the estimation procedure and the linear quadratic regulator (LQR) use a two-dimensional model which comprises the first cycle counter state (Cin) and the compensation factor (R) as states.

2. Method according to claim 1, in which, in Step i), a variation of the compensation factor (R) based on a stochastic process is modelled, in particular based on a Gaussian noise process.

3. Method according to claim 1 or 2, in which the manipulating variable (CV) is updated after each receipt of a synchronisation message (SY(k)) in the given second node (SLn) and supplied to the control loop (PL), preferably via a ZOH link.

4. Method according to claim 3, in which the control loop (PL) for the linear quadratic regulator (LQR) at the time of receipt of a synchronisation message (SY(k)) in the kth synchronisation cycle in the nth second node (SLn) and immediately before an updating of the manipulating variable (CV) is written as follows:

$$\begin{bmatrix} CT_n(k) \\ o_n(k) \end{bmatrix} = \mathbf{A}_n(k-1) \begin{bmatrix} CT_n(k-1) \\ o_n(k-1) \end{bmatrix} + \begin{bmatrix} 0 \\ 1 \end{bmatrix} \cdot u_n^s(k-1)$$

where $CT_n(k)$ is the regulated first cycle counter state (CT) at the time of receipt of the synchronisation message (SY(k)) in the kth synchronisation cycle;
where $o_n(k)$ is the regulated compensation factor (CR) at the time of receipt of the synchronisation message (SY (k)) in the kth synchronisation cycle;

where $u_n^s(k-1)$ is the correction term for the regulated compensation factor (CR) used in the (k-1)th synchronisation cycle;
where

$$\mathbf{A}_n(k-1) = \begin{bmatrix} 1 & a_n(k-1) \\ 0 & 1 \end{bmatrix};$$

where $a_n(k\text{-}1)$ is the time difference between two synchronisation messages (SY(k)) received sequentially in the given second node (SLn), indicated in second cycle counter states according to the internal clock frequency of the nth second node (SLn).

5. Method according to claim 4, in which the control loop (PL) for the linear quadratic regulator (LQR) after an updating of the manipulating variable (CV) at the time of receipt of the synchronisation message (SY(k)) in the kth synchronisation cycle in the nth second node (SLn) until the next updating of the manipulating variable (CV) is written as follows:

$$CT_n(s) = CT_n(k) + o_n(k) \cdot \left( s - s_n^{\text{in}}(k) \right)$$

where $CT_n(s)$ is the regulated first cycle counter state (CT) at the time of a measured second cycle counter state s of the given second node (SLn) between the two updates;

where $s_n^{in}(k)$ is the measured second cycle counter state of the given second node (SLn) at the time of receipt of the synchronisation message (SY(k)) in the kth synchronisation cycle.

6. Method according to one of the preceding claims, in which the first cycle counter state (Cin) and the compensation factor (R) in Step i) are estimated by means of an estimation procedure in the form of a stochastic state estimator (KF), and in particular a Kalman filter.

7. Method according to claim 6, in which the first cycle counter state (Cin) and the compensation factor (R) are estimated by means of an estimation procedure in the form of a Kalman filter (KF), which estimates as states the first cycle counter state (Cin) and the compensation factor (R) at the time of receipt of a synchronisation message (SY(k)) in the given second node (SLn) and an associated stochastic variance (qin), and uses as an observable the information (SI, SI') contained in the synchronisation message (SY(k)) received.

8. Method according to claim 7, in which the information (SI, SI') in a synchronisation message (SY(k)) comprises an estimated first cycle counter state (Cout, Cout') at the time of transmission of the synchronisation message (SY(k)) in the corresponding second node (SLn) and an associated stochastic variance (qout, qout').

9. Method according to Claim 8, in which the following state space model is used for the Kalman filter (KF) in the nth second node (SLn) for the kth synchronisation cycle:

$$\begin{bmatrix} M_n^{in}(k) \\ r_n(k) \end{bmatrix} = \mathbf{A}_n(k-1) \begin{bmatrix} M_n^{in}(k-1) \\ r_n(k-1) \end{bmatrix} + \begin{bmatrix} 0 \\ 1 \end{bmatrix} \cdot \omega_n(k-1)$$

$$\hat{M}_{n-1}^{out}(k) = \begin{bmatrix} 1 & -\hat{d}_n(k) \end{bmatrix} \begin{bmatrix} M_n^{in}(k) \\ r_n(k) \end{bmatrix} + v_n(k)$$

where $M_n^{in}(k)$ is the first cycle counter state (Cin) at the time of receipt of the synchronisation message (SY(k)) in the nth second node in the kth synchronisation cycle;

where $r_n(k)$ is the compensation factor (R) at the time of receipt of the synchronisation message (SY(k)) in the nth second node in the kth synchronisation cycle;

where $\hat{M}_{n-1}^{out}(k)$ is the estimated first cycle counter state at the time of transmission of the synchronisation message (SY(k)) in the (n-1) th second node (SL(n-1)) or in the first node (MA) in the kth synchronisation cycle;

where

$$\mathbf{A}_n(k-1) = \begin{bmatrix} 1 & a_n(k-1) \\ 0 & 1 \end{bmatrix};$$

where $a_n(k\text{-}1)$ is the time difference between two synchronisation messages (SY(k)) received sequentially in the given second node (SLn), indicated in second cycle counter states according to the internal clock frequency of the nth second node (SLn);

where $\hat{d}_n(k)$ is an estimated time delay between the time of transmission of the synchronisation message (SY(k)) sent out by the (n-1)th node (SL(n-1)) and the time of receipt of this synchronisation message (SY(k)) in the nth second node (SLn), indicated in second cycle counter states according to the internal clock frequency of the nth second node (SLn);

where $v_n(k)$ is a Gaussian noise term representing an observation noise;

where $\omega_n(k\text{-}1)$ is a Gaussian noise term representing a process noise.

10. Method according to claim 9 or 10, in which the estimated first cycle counter state (Cout') of the subsequent synchronisation message (SY(k)) in a given second node (SLn) and the associated stochastic variance (qout') are calculated with the aid of a node processing time from the first cycle counter state (Cin) estimated by means of the Kalman filter and from the compensation factor (R) estimated by the same means at the time of receipt of a synchronisation message (SY(k)) in the given second node (SLn) and from the associated stochastic variance (qin) and are inserted into the subsequent synchronisation message (SY(k)), where the node processing time represents an estimated time lapse in the given second node (SLn) between the receipt of the synchronisation message (SY(k)) received in the given second node (SLn) and the transmission of the subsequent synchronisation message (SY(k)).

11. Method according to one of the preceding claims, in which the time synchronisation is based on the IEEE 1588 or IEEE1588v2 or IEC 61588 or IEEE 802.1AS standard.

12. Method according to one of the preceding claims, in which the nodes (M1, SL1, SL2, SLn) communicate with one another on the basis of the PROFINET standard.

13. Method according to one of the preceding claims, in which the method is used in an industrial automation system.

14. Node for use as a second node (SLn) in a method for time synchronisation in a communications network having multiple nodes (MA, SL1, SL2, SLn), where the nodes (MA, SL1, SL2, SLn) comprise a first node (MA) and one or more second nodes (SL1, SL2, SLn), where the first node (MA) generates first cycle counter states according to a reference clock frequency and the second node or nodes (SL1, SL2) each generate second cycle counter states according to an internal clock frequency, where a time synchronisation is carried out in sequential synchronisation cycles, in which synchronisation messages (SY(k)) originating from the first node (MA) are sequentially transmitted from one of the nodes (MA, SL1, SL2, SLn) to one of the other nodes (MA, SL1, SL2, SLn), and a synchronisation message (SY(k)) transmitted by a node (MA, SL1, SL2, SLn) contains information (SI, SI') used for time synchronisation in the node (SL1, SL2, SLn) receiving the synchronisation message (SY(k)), where the second node (SLn) is designed so that, in operation, it carries out a time synchronisation in such a manner that

  i) a first cycle counter state (Cin) and a compensation factor (R), which represents a current clock ratio of the reference clock frequency to the internal clock frequency of the given second node (SLn), are estimated for a measured second cycle counter state ($s_n^{in}(k)$) in the second node (SLn) based on an estimation procedure with the aid of the information (SI, SI') in a received synchronisation message (SY(k));
  ii) a regulated first cycle counter state (CT) and a regulated compensation factor (CR) based on a control loop (PL) are determined from the estimated first cycle counter state (Cin) and the estimated compensation factor (R) by means of a linear quadratic regulator (LQR), which includes a correction term for the regulated compensation factor (CR) as a manipulating variable (CV), with the regulated first cycle counter state (CT) representing the synchronised time, **characterised in that**

the estimation procedure and the linear quadratic regulator (LQR) use a two-dimensional model which comprises the first cycle counter state (Cin) and the compensation factor (R) as states.

15. Communications network having multiple nodes (MA, SL1, SL2), where the nodes (MA, SL1, SL2) comprise a first node (MA) and one or more second nodes (SL1, SL2, SLn),

16. Communications network according to claim 15, arranged in such a manner that a method in accordance with one of claims 2 through 13 can be implemented in the communication network.

**Revendications**

1. Procédé de synchronisation temporelle dans un réseau de communication comportant une pluralité de noeuds (MA, SL1, SL2, SLn), les noeuds (MA, SL1, SL2, SLn) incluant un premier noeud (MA) et un ou plusieurs deuxièmes noeuds (SL1, SL2, SLn), le premier noeud (MA) générant des premiers états de comptage d'impulsions d'horloge selon une fréquence d'impulsion d'horloge de référence et le ou les deuxièmes noeuds (SL1, SL2, SLn) générant respectivement des deuxièmes états de comptage d'impulsions d'horloge selon une fréquence d'impulsions d'horloge interne, une synchronisation temporelle étant effectuée dans des cycles de synchronisation successifs dans lesquels des messages de synchronisation (SY(k)) sont respectivement transmis, à partir du premier noeud (MA), successivement, de l'un des noeuds (MA, SL1, SL2, SLn) vers l'un des autres noeuds (MA, SL1, SL2, SLn), et un message de synchronisation (SY(k)) émis par un noeud (MA, SL1, SL2, SLn) contenant une information (SI, SI') qui est utilisée pour la synchronisation temporelle dans le noeud (SL1, SL2, SLn) qui reçoit le message de synchronisation (SY(k)), une synchronisation temporelle étant effectuée dans un deuxième noeud respectif (SLn) d'au moins une partie des deuxièmes noeuds (SL1, SL2, SLn) de manière telle que :

i) un premier état de comptage d'impulsions d'horloge (Cin) et un facteur de compensation (R) qui indique un rapport d'impulsions d'horloge actuel entre la fréquence d'impulsions d'horloge de référence et la fréquence d'impulsions d'horloge interne du deuxième noeud respectif (SLn) est estimé, sur la base d'un procédé d'estimation à l'aide de l'information (SI, SI') contenue dans un message de synchronisation reçu (SY(k)), pour un deuxième état de comptage d'impulsions d'horloge ($s_n^{in}(k)$) mesuré dans le deuxième noeud respectif (SLn) ;
ii) sont déterminés, à partir du premier état de comptage d'impulsions d'horloge estimé (Cin) et du facteur de compensation estimé (R), à l'aide d'un régulateur linéaire quadratique (LQR), un premier état de comptage d'impulsions d'horloge réglé (CT) et un facteur de compensation réglé (CR) sur la base d'un trajet de régulation (PL) qui contient, en tant que grandeur de réglage (CV), un terme de correction pour le facteur de compensation réglé (CR), le premier état de comptage d'impulsions d'horloge réglé (CT) représentant le temps synchronisé,

**caractérisé en ce que** le procédé d'estimation et le régulateur linéaire quadratique (LQR) utilisent un modèle bidimensionnel qui comprend, en tant qu'état, le premier état de comptage d'impulsions d'horloge (Cin) et le facteur de compensation (CR).

2. Procédé selon la revendication 1, selon lequel est modélisée, à l'étape i), une variation du facteur de compensation (R) sur la base d'un processus aléatoire, et plus particulièrement sur la base d'un processus de bruit gaussien.

3. Procédé selon la revendication 1 ou 2, selon lequel la grandeur de réglage (CV) est mise à jour après chaque réception d'un message de synchronisation (SY(k)) dans le deuxième noeud respectif (SLn) et est amenée sur le trajet de régulation (PL) de préférence via un élément de maintien d'ordre zéro (ZOH).

4. Procédé selon la revendication 3, selon lequel le trajet de régulation (PL) pour le régulateur linéaire quadratique (LQR) au moment de la réception d'un message de synchronisation (SY (k) ) au $k^{ième}$ cycle de synchronisation dans le $n^{ième}$ deuxième noeud (SLn) et immédiatement avant une mise à jour de la grandeur de réglage (CV), se présente comme suit:

$$\begin{bmatrix} CT_n(k) \\ o_n(k) \end{bmatrix} = A_n(k-1) \begin{bmatrix} CT_n(k-1) \\ o_n(k-1) \end{bmatrix} + \begin{bmatrix} 0 \\ 1 \end{bmatrix} \cdot u_n^s(k-1)$$

où :

$CT_n(k)$ est le premier état de comptage d'impulsions d'horloge réglé (CT) au moment de la réception du message de synchronisation (SY (k) ) au $k^{ième}$ cycle de synchronisation ;
$o_n(k)$ est le facteur de compensation réglé (CR) au moment de la réception du message de synchronisation (SY(k)) au $k^{ième}$ cycle de synchronisation ;

$u_n^s(k-1)$ est le terme de correction utilisé au $(k-1)^{ième}$ cycle de synchronisation pour le facteur de compensation réglé (CR) ;

$$A_n(k-1) = \begin{bmatrix} 1 & a_n(k-1) \\ 0 & 1 \end{bmatrix};$$

$a_n(k\text{-}1)$ est la différence de temps entre deux messages de synchronisation (SY(k)) reçus successivement dans le deuxième noeud respectif (SLn), indiquée dans des deuxièmes états de comptage d'impulsions d'horloge selon la fréquence d'impulsions d'horloge interne du $n^{ième}$ deuxième noeud (SLn).

5. Procédé selon la revendication 4, selon lequel le trajet de régulation (PL) pour le régulateur linéaire quadratique (LQR) après une mise à jour de la grandeur de réglage (CV) au moment de la réception du message de synchronisation (SY (k) ) au $k^{\text{ième}}$ cycle de synchronisation dans le $n^{\text{ième}}$ deuxième noeud (SLn) jusqu'à la mise à jour suivante de la grandeur de réglage (CV), se présente comme suit:

$$CT_n(s) = CT_n(k) + o_n(k) \cdot \left( s - s_n^{\text{in}}(k) \right)$$

où :

$CT_n$ **(s)** est le premier état de comptage d'impulsions d'horloge réglé (CT) au moment d'un deuxième état de comptage d'impulsions d'horloge mesuré s du deuxième noeud respectif (SLn) entre les deux mises à jour ;

$s_n^{\text{in}}(k)$ est le deuxième état de comptage d'impulsions d'horloge mesuré du deuxième noeud respectif (SLn) au moment de la réception du message de synchronisation (SY(k)) au $k^{\text{ième}}$ cycle de synchronisation.

6. Procédé selon l'une des revendications précédentes, selon lequel le premier état de comptage d'impulsions d'horloge (Cin) et le facteur de compensation (R) sont estimés, à l'étape i), au moyen d'un procédé d'estimation sous la forme d'un estimateur d'état stochastique (KF), et plus particulièrement d'un filtre de Kalman.

7. Procédé selon la revendication 6, selon lequel le premier état de comptage d'impulsions d'horloge (Cin) et le facteur de compensation (R) sont estimés au moyen d'un procédé d'estimation sous la forme d'un filtre de Kalman (KF) qui estime, en tant qu'état, le premier état de comptage d'impulsions d'horloge (Cin) et le facteur de compensation (R) au moment de la réception d'un message de synchronisation (SY(k)) dans le deuxième noeud respectif (SLn) et une variance stochastique associée (qin) et utilise, en tant qu'observable, l'information (SI, SI') contenue dans le message de synchronisation reçu (SY(k)).

8. Procédé selon la revendication 7, selon lequel l'information (SI, SI') contenue dans un message de synchronisation (SY(k)) comprend un premier état de comptage d'impulsions d'horloge estimé (Cout, Cout') au moment de l'émission du message de synchronisation (SY(k)) dans le deuxième noeud respectif (SLn) et une variance stochastique associée (qout, qout').

9. Procédé selon la revendication 8, selon lequel est utilisé le modèle d'espace d'états suivant pour le filtre de Kalman (KF) dans le $n^{\text{ième}}$ deuxième noeud (SLn) pour le $k^{\text{ième}}$ cycle de synchronisation :

$$\begin{bmatrix} M_n^{\text{in}}(k) \\ r_n(k) \end{bmatrix} = A_n(k-1)\begin{bmatrix} M_n^{\text{in}}(k-1) \\ r_n(k-1) \end{bmatrix} + \begin{bmatrix} 0 \\ 1 \end{bmatrix} \cdot \omega_n(k-1)$$

$$\hat{M}_{n-1}^{\text{out}}(k) = \begin{bmatrix} 1 & -\hat{d}_n(k) \end{bmatrix}\begin{bmatrix} M_n^{\text{in}}(k) \\ r_n(k) \end{bmatrix} + v_n(k)$$

où :

$M_n^{\text{in}}(k)$ est le premier état de comptage d'impulsions d'horloge (Cin) au moment de la réception du message de synchronisation (SY(k)) dans le $n^{\text{ième}}$ deuxième noeud au $k^{\text{ième}}$ cycle de synchronisation ;

$r_n(k)$ est le facteur de compensation (R) au moment de la réception du message de synchronisation (SY(k)) dans le $n^{\text{ième}}$ deuxième noeud au $k^{\text{ième}}$ cycle de synchronisation ;

$\hat{M}_{n-1}^{\text{out}}(k)$ est le premier état de comptage d'impulsions d'horloge estimé au moment de l'émission du message de synchronisation (SY(k)) dans le $(n-1)^{\text{ième}}$ deuxième noeud (SL(n-1)) ou dans le premier noeud (MA) au $k^{\text{ième}}$ cycle de synchronisation ;

$$A_n(k-1) = \begin{bmatrix} 1 & a_n(k-1) \\ 0 & 1 \end{bmatrix};$$

$a_n(k\text{-}1)$ est la différence de temps entre deux messages de synchronisation (SY(k)) reçus successivement dans le deuxième noeud respectif (SLn), indiquée dans des deuxièmes états de comptage d'impulsions d'horloge selon la fréquence d'impulsions d'horloge interne du n$^{ième}$ deuxième noeud (SLn) ;

$\hat{d}_n(k)$ est un temps de retard estimé entre le moment de l'émission du message de synchronisation (SY(k)) émis par le (n-1)$^{ième}$ deuxième noeud (SL(n-1)) et le moment de réception de ce message de synchronisation (SY(k)) dans le n$^{ième}$ deuxième noeud (SLn), indiqué dans des deuxièmes états de comptage d'impulsions d'horloge selon la fréquence d'impulsions d'horloge interne du n$^{ième}$ deuxième noeud (SLn) ;

$\nu_n(k)$ est un terme de bruit gaussien qui représente un bruit d'observation ;

$\omega_n(k\text{-}1)$ est un terme de bruit gaussien qui représente un bruit de processus.

10. Procédé selon la revendication 9 ou 10, selon lequel le premier état de comptage d'impulsions d'horloge estimé (Cout') du message de synchronisation suivant (SY(k)) dans le deuxième noeud respectif (SLn) et la variance stochastique associée (qout') sont calculés à l'aide d'un temps de traitement de noeud, à partir du premier état de comptage d'impulsions d'horloge (Cin) estimé par le filtre de Kalman et du facteur de compensation (R) estimé par le filtre de Kalman, au moment de la réception d'un message de synchronisation (SY(k)) dans le deuxième noeud respectif (SLn) et de la variance stochastique associée (qin), et insérés dans le message de synchronisation suivant (SY(k)), le temps de traitement de noeud représentant un temps de retard estimé dans le deuxième noeud respectif (SLn) entre la réception du message de synchronisation (SY(k)) reçu dans le deuxième noeud respectif (SLn) et l'émission du message de synchronisation suivant (SY(k)).

11. Procédé selon l'une des revendications précédentes, selon lequel la synchronisation temporelle est basée sur les normes IEEE 1588 ou IEEE 1588v2 ou IEC 61588 ou IEEE 802.1AS.

12. Procédé selon l'une des revendications précédentes, selon lequel les noeuds (M1, SL1, SL2, SLn) communiquent entre eux sur la base de la norme PROFINET.

13. Procédé selon l'une des revendications précédentes, selon lequel le procédé est mis en oeuvre dans un système d'automatisation industriel.

14. Noeud destiné à être utilisé en tant que deuxième noeud (SLn) dans un procédé de synchronisation temporelle dans un réseau de communication comportant une pluralité de noeuds (MA, SL1, SL2, SLn), les noeuds (MA, SL1, SL2, SLn) incluant un premier noeud (MA) et un ou plusieurs deuxièmes noeuds (SL1, SL2, SLn), le premier noeud (MA) générant des premiers états de comptage d'impulsions d'horloge selon une fréquence d'impulsion d'horloge de référence et le ou les deuxièmes noeuds (SL1, SL2) générant respectivement des deuxièmes états de comptage d'impulsions d'horloge selon une fréquence d'impulsions d'horloge interne, une synchronisation temporelle étant effectuée dans des cycles de synchronisation successifs dans lesquels des messages de synchronisation (SY(k)) sont respectivement transmis, à partir du premier noeud (MA), successivement, de l'un des noeuds (MA, SL1, SL2, SLn) vers l'un des autres noeuds (MA, SL1, SL2) et un message de synchronisation (SY(k)) émis par un noeud (MA, SL1, SL2, SLn) contenant une information (SI, SI') qui est utilisée pour la synchronisation temporelle dans le noeud (SL1, SL2, SLn) qui reçoit le message de synchronisation (SY(k)), le deuxième noeud (SLn) étant réalisé de manière à effectuer une synchronisation temporelle de manière telle, pendant le fonctionnement, que :

i) un premier état de comptage d'impulsions d'horloge (Cin) et un facteur de compensation (R) qui indique un rapport d'impulsions d'horloge actuel entre la fréquence d'impulsions d'horloge de référence et la fréquence d'impulsions d'horloge interne du deuxième noeud respectif (SLn) est estimé, sur la base d'un procédé d'estimation à l'aide de l'information (SI, SI') contenue dans un message de synchronisation reçu (SY(k)), pour un deuxième état de comptage d'impulsions d'horloge ($s_n^{in}(k)$) mesuré dans le deuxième noeud (SLn) ;

ii) sont déterminés, à partir du premier état de comptage d'impulsions d'horloge estimé (Cin) et du facteur de compensation estimé (R), à l'aide d'un régulateur linéaire quadratique (LQR), un premier état de comptage d'impulsions d'horloge réglé (CT) et un facteur de compensation réglé (CR) sur la base d'un trajet de régulation (PL) qui contient, en tant que grandeur de réglage (CV), un terme de correction pour le facteur de compensation réglé (CR), le premier état de comptage d'impulsions d'horloge réglé (CT) représentant le temps synchronisé,

**caractérisé en ce que** le procédé d'estimation et le régulateur linéaire quadratique (LQR) utilisent un modèle bidimensionnel qui comprend, en tant qu'état, le premier état de comptage d'impulsions d'horloge (Cin) et le facteur de compensation (CR).

15. Réseau de communication comportant une pluralité de noeuds (MA, SL1, SL2), les noeuds (MA, SL1, SL2) incluant un premier noeud (MA) et un ou plusieurs deuxièmes noeuds (SL1, SL2, SLn) selon la revendication 14.

16. Réseau de communication selon la revendication 15, réalisé de manière telle qu'un procédé selon l'une des revendications 2 à 13 peut être exécuté dans ledit réseau de communication.

# FIG 1

# FIG 2

# FIG 3

$CT = CT_n(s)$

$\left.\begin{array}{c} CT = CT_n(k) \\ CR = o_n(k) \end{array}\right\} \hat{=} \hat{x}_n^s(k)$

P

ZOH

SW

D ⊕ → LQR

$CV = u_n^s(k)$

LDE

$\left.\begin{array}{c} Cin = \hat{M}_n^{in}(k) \\ R = \hat{r}_n(k) \end{array}\right\} \hat{=} \hat{x}_n^M(k)$

$d_n(k)$

$SI \begin{cases} Cout = \hat{M}_{n-1}^{out}(k) \\ qout = \sigma_{\eta_{n-1}}^{out} \end{cases}$

SLn

$\left.\begin{array}{c} Cout' = \hat{M}_n^{out}(k) \\ qout' = \sigma_{\eta_n}^{out} \end{array}\right\} SI'$

KF

$qin = P_n(k)$

BDC

$S_n^{in}(k)$

$S_n^{out}(k)$

SLC

EP 2 434 674 B1

FIG 4

# EP 2 434 674 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 09012028 A
- DE 102010022525

**In der Beschreibung aufgeführte Nicht-Patentliteratur**

- **C. NA ; R. L. SCHEITERER ; D. OBRADOVIC ; A KALMAN.** *Filter Approach To Clock Synchronization Of Cascaded Network Elements, 1st IFAC Workshop on Estimation and Control of Networked Systems (NecSys'09,* 24. September 2009
- **C. NA ; P. WOLFRUM ; D. OBRADOVIC ; R. L. SCHEITERER.** Optimal estimation and control of clock synchronization following the precision time protocol. *Proc. of MSC,* 2010